# EUROPEAN PATENT SPECIFICATION

(11) **EP 3 993 343 B1**
(45) Date of publication and mention of the grant of the patent: **11.12.2024**
(21) Application number: 20854614.3
(22) Date of filing: 14.08.2020
(51) Int. Cl.: H04L 9/32, H04L 9/40, H04L 65/40

(54) **METHOD AND DEVICE FOR TRANSFERRING BUNDLE BETWEEN DEVICES**
VERFAHREN UND VORRICHTUNG ZUM BEWEGEN EINES BÜNDELS ZWISCHEN VORRICHTUNGEN
PROCÉDÉ ET DISPOSITIF PERMETTANT DE DÉPLACER UN FAISCEAU ENTRE DISPOSITIFS

(30) Priority: 16.08.2019 KR 20190100350; 22.11.2019 KR 20190151238; 21.02.2020 KR 20200021608; 14.07.2020 KR 20200086799
(43) Date of publication of application: 04.05.2022
(73) Proprietor: Samsung Electronics Co., Ltd., Suwon-si, Gyeonggi-do 16677 (KR)
(72) Inventor: LIM, Taehyung, Suwon-si, Gyeonggi-do 16677 (KR); KOO, Jonghoe, Suwon-si, Gyeonggi-do 16677 (KR); YOON, Kangjin, Suwon-si, Gyeonggi-do 16677 (KR); LEE, Duckey, Suwon-si, Gyeonggi-do 16677 (KR); LEE, Hyewon, Suwon-si, Gyeonggi-do 16677 (KR)
(74) Representative: Gulde & Partner
(86) International application number: PCT/KR2020/010889
(87) International publication number: WO 2021/034048

(56) References cited:
- JP-A- 2018 121 334
- KR-A- 20150 013 294
- KR-B1- 101 523 142
- US-A1- 2016 036 921
- US-A1- 2017 064 552
- US-A1- 2019 251 527
- GSM ASSOCIATION: "LSin GSMA on Smart Secure Platform Ecosystem and Interoperability Principles", vol. WG SCP REQ SCP-REQ, 24 January 2018 (2018-01-24), pages 1 - 9, XP014309262, Retrieved from the Internet <URL:docbox.etsi.org/SCP/SCP-WG-R/05-CONTRIBUTIONS/2018/SCPREQ(18)000004_LSin_GSMA_on_Smart_Secure_Platform_Ecosystem_and_Interoperab.zip/RSPTFTEC33_Doc_025R04 SSP Ecosystem and Interoperability Principles.pdf> [retrieved on 20180124]
- SAMSUNG R&D INSTITUTE UK: "pCR 103 666-2 iSSP Ecosystem and Certificate negotiation procedure", vol. WG SCP TEC SCP-TEC, 10 September 2018 (2018-09-10), pages 1 - 8, XP014327118, Retrieved from the Internet <URL:docbox.etsi.org/SCP/SCP-WG-T/05-CONTRIBUTIONS/2018/SCPTEC(18)000332_pCR_103_666-2_iSSP_Ecosystem_and_Certificate_negotiation_pro.docx> [retrieved on 20180910]

## Description

### [Technical Field]

The disclosure relates to a smart secure element and, more particularly, to a method and an apparatus for moving a bundle between smart security media.

### [Background Art]

To meet the demand for wireless data traffic having increased since deployment of 4G communication systems, efforts have been made to develop an improved 5G or pre-5G communication system. Therefore, the 5G or pre-5G communication system is also called a "Beyond 4G Network" communication system or a "Post LTE" system. The 5G communication system is considered to be implemented in ultra-higher frequency (mmWave) bands (e.g., 60GHz bands) so as to accomplish higher data rates. To decrease propagation loss of the radio waves and increase the transmission distance in the ultra-higher frequency bands, beamforming, massive multiple-input multiple-output (MIMO), full dimensional MIMO (FD-MIMO), array antenna, analog beam forming, large scale antenna techniques are discussed in 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (RAN) as the above-described big data processing technology may also be considered an example of convergence of the 5G technology with the IoT technology.

US 2017/064552 A1 is concerned with downloading and installing a profile to a terminal. GSM ASSOCIATION: "LSin GSMA on Smart Secure Platform Ecosystem and Interoperability Principles", ETSI DRAFT; SCPREQ(18)000004, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. WG SCP REQ SCP-REQ 24 January 2018, pages 1-9, XP014309262) describes the smart secure platform ecostem. SAMSUNG R&D INSTITUTE UK: "pCR 103 666-2 iSSP Ecosystem and Certificate negotiation procedure", ETSI DRAFT; SCPTEC(18)000332, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. WG SCP TEC SCP-TEC 10 September 2018, pages 1-8, XP014327118) discloses in section 9.7.y, certificate negotiation for secondary platform bundle management.

### [Disclosure of Invention]

### [Technical Problem]

Disclosed embodiments provide an apparatus and a method of enabling a reliable bundle tranfer service when bundles between security modules included in two electronic devices are transfered.

### [Solution to Problem]

The invention is set out in the appended set of claims. In order to solve the technical problems, the disclosure may have the following solutions.

According to some embodiments of the disclosure, an electronic device to transmit a bundle may include an operation of selecting a bundle to be transmitted by a user or an external input, an operation of checking whether the selected bundle can be transmitted through a `bundle tranfer configuration', an operation of transmitting the `bundle tranfer configuration' to an electronic device to receive the bundle, and an operation of updating the `bundle tranfer configuration' as necessary.

According to some embodiments of the disclosure, an electronic device to receive a bundle may include an operation of receiving the `bundle tranfer configuration' and an operation of updating the `bundle tranfer configuration' as necessary.

According to some embodiments of the disclosure, an electronic device to transmit a bundle may include an operation of selecting a bundle to be transmitted by a user or an external input, an operation of binding a `bundle tranfer code' with the bundle to be transmitted, an operation of transmitting the `bundle tranfer code' to an electronic device to receive the bundle, and checking whether the `bundle tranfer code' is valid or identifying the bundle to be transmitted through the `bundle tranfer code' when a bundle transmission request from an electronic device to receive the bundle includes the `bundle tranfer code'.

According to some embodiments of the disclosure, an electronic device to receive a bundle may include an operation of receiving the `bundle tranfer code' and inserting the bundle tranfer code' into a bundle request made to an electronic device to transmit the bundle.

According to some embodiments of the disclosure, two electronic devices may pass through a certificate negotiation process described below in order to identify information for authenticating each other, generate authentication information for verifying itself, transmit the authentication information to the counterpart electronic device, and verify the received authentication information to verify the counterpart electronic device.

According to some embodiments of the disclosure, an electronic device to transmit a bundle may transmit the bundle to an electronic device to receive the bundle, and the electronic device to receive the bundle may install the received bundle.

### [Advantageous Effects of Invention]

According to various embodiments of the disclosure, a bundle installed in one device can be transmitted to and installed in another device through a stable and efficient method.

### [Brief Description of Drawings]

FIG. 1 is a conceptual diagram illustrating an SSP according to an embodiment of the disclosure.
FIG. 2 is a conceptual diagram illustrating an internal structure of the SSP according to an embodiment of the disclosure.
FIG. 3 illustrates an example of elements in a terminal used by the terminal for downloading and installing a bundle to the SSP according to an embodiment of the disclosure.
FIG. 4 illustrates an example of a method by which two terminals interact with each other in order to transmit bundles to each other according to an embodiment of the disclosure.
FIG. 5 conceptually illustrates a procedure of transmitting a bundle from one terminal to another terminal according to an embodiment of the disclosure.
FIG. 6 illustrates a detailed procedure of the bundle transmission preparation procedure among the procedures presented in FIG. 5.
FIG. 7 illustrates a detailed procedure of the procedure in which the bundle is transmitted among the procedures illustrated in FIG. 5.
FIG. 8 illustrates a detailed procedure of a process of finishing the transmission process after the bundle is transmitted among the procedures illustrated in FIG. 5.
FIG. 9 illustrates a configuration of the terminal according to some embodiments of the disclosure.
FIG. 10 is a flowchart illustrating a method of transmitting a bundle by a first secure element according to an embodiment of the disclosure.
FIG. 11 is a flowchart illustrating a method of receiving a bundle by a second secure element according to an embodiment of the disclosure.
FIG. 12 illustrates an example of a method by which two terminals interact with each other in order to transmit a profile to each other according to an embodiment of the disclosure.
FIG. 13 illustrates a procedure in which one terminal transmits a profile to another terminal according to an embodiment of the disclosure.
FIG. 14 illustrates a procedure in which the terminal makes a request for approval from the RSP server in order to transmit a profile while the procedure illustrated in FIG. 13 is performed.
FIG. 15 conceptually illustrates a procedure in which one terminal transmits a profile to another terminal according to an embodiment of the disclosure.
FIG. 16 illustrates a detailed procedure of the profile transmission preparation procedure among the procedures illustrated in FIG. 15.
FIG. 17 illustrates a detailed procedure of performing mutual authentication between two terminals among the procedures illustrated in FIG. 15.
FIG. 18 illustrates a detailed procedure in which one terminal transmits a profile to another terminal and the transmitted profile is installed among the procedures illustrated in FIG. 15.

### [Mode for the Invention]

Hereinafter, embodiments of the disclosure will be described in detail with reference to the accompanying drawings.

In describing embodiments of the disclosure, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

In order to safely store security information and provide a safe security service through the stored security information, importance of security media is gradually emphasized.

Particularly, secure elementa secure element may be installed in various electronic devices (smartphones, tablets, wearable devices, vehicles, IoT devices, and the like) due to a high security level and used for various services included mobile communication network access, payment, and user authentication. The secure element may have various form factors such as a universal integrated circuit card (UICC), an embedded secure element (eSE), and an SD card.

Particularly, a smart secure platform (SSP) into which the UICC and the eSE are integrated is spotlighted as a next-generation secure element due to many advantages such as efficiency of an implementation space, enhancement of operation capability, and expansion of a storage space. Further, the SSP is a secure element suitable for implementing a security function required by a 5G terminal and an IoT terminal, and thus importance of the SSP is gradually emphasized.

Various applications are installed and executed in the SSP in the form of a bundle. Accordingly, importance of a method and an apparatus for safely installing the bundle in the SSP is emphasized. The method of installing the bundle in the SSP may be largely divided into a method of receiving the bundle from an external server and a method of receiving the bundle from another electronic device.

The method of receiving the bundle from another electronic device, that is, a method by which a bundle is transmitted from one secure element to another secure element is spotlighted as a next-generation bundle transmission technology due to its advantage of transmitting user information stored or configured in one secure element to a new secure element and using the same or its advantage of not needing assistance from an external entity during a process of transmitting the bundle.

Accordingly, a scheme for safely moving a bundle from one secure element to another secure element is required, and the need to develop a method and an apparatus therefor is emerging.

Hereinafter, various embodiments therefor are described with reference to drawings. Meanwhile, although each embodiment is described with the SSP as an example of the secure element, the scope of the disclosure is not limited to the SSP. For example, it is apparent to those skilled in the art that various embodiments described below may be substantially equally or similarly applied to another secure element performing equal or similar functions.

Specific terms used in the following description are provided to assist understanding of the disclosure, and the use of the specific terms may be modified in different forms without departing from the technical idea of the disclosure.

A "secure element (SE)" is a security module configured as a single chip capable of storing security information (for example, a mobile communication network access key, user identity information such as an identification card/passport, credit card information, and an encryption key) and installing and operating a control module (for example, a network access control module such as a USIM, an encryption module, or a key generation module) using the stored security information. The SE may be used for various electronic devices (for example, smartphones, tablets, wearable devices, vehicles, and IoT devices) and may provide security services (for example, mobile communication network access, payment, and user authentication) through the security information and the control module.

The SE may be divided into a universal integrated circuit card (UICC), an embedded secure element (eSE), and a smart secure platform into which the UICC and the eSE are integrated, and the type thereof may be divided into a removable type, an embedded type, and an integrated type in which the SE is integrated into a specific element or a system on chip (SoC) according to the form connected to or installed in the electronic device.

The "universal integrated circuit card (UICC)" is a smart card inserted into a mobile communication terminal to be used and is also called a UICC card. The UICC may include an access control module for accessing a network of a mobile communication service provider. For example, the access control module may include a universal subscriber identity module (USIM), a subscriber identity module (SIM), and an IP multimedia service identity module (ISIM). The UICC including the USIM is generally called a USIM card. Similarly, the UICC including the SIM module is generally called a SIM card. Meanwhile, the SIM module may be installed when the UICC is manufactured, or the SIM of the mobile communication service which the user descries to use at a desired time point may be downloaded to the UICC card. The UICC card may download and install a plurality of SIM modules and select and use at least one of the SIM modules. The UICC card may be or may not be fixed to the terminal. A UICC fixed to the terminal to be used is referred to as an embedded UICC (eUICC), and particularly, a UICC embedded into a system-on-chip (SoC) including a communication processor of the terminal, an application processor, or a single processor structure into which the two processors are integrated is referred to as an integrated UICC (iUICC). In general, the eUICC and the iUICC may be fixed to the terminal to be used and may be a UICC card which can remotely download and select a SIM module. In the disclosure, the UICC that can remotely download and select the SIM module is collectively called the eUICC or the iUICC. That is, among UICC cards that can remotely download and select the SIM module, UICC cards which are fixed to or not fixed to the terminal are collectively called eUICCs or iUICCs.

The term UICC in the disclosure may be used interchangeably with the term SIM, and the term eUICC may be used interchangeably with the term eSIM.

An "eUICC identifier (ID)" may be a unique identifier of the eUICC embedded into the terminal, and may be referred to as an EID. Further, when the provisioning profile is pre-installed in the eUICC, the eUICC ID may be an identifier of the corresponding provisioning profile (profile ID). Further, in an embodiment of the disclosure, when the terminal and the eUICC chip are not separated from each other, the eUICC ID may be a terminal ID. In addition, the eUICC ID may refer to a specific secure domain of the eUICC chip.

The "embedded secure element (eSE)" is a fixed SE fixed to an electronic device to be used. In general, the eSE may be manufactured for a manufacturer only by a request from the manufacturer of the terminal and may include an operating system and framework when manufactured. The eSE may remotely download and install a service control module in the applet form and may be used for various security services such as an electronic wallet, ticketing, an electronic passport, and a digital key. In the disclosure, SEs in the single chip form embedded into electronic devices which can remotely download and install service control modules are collectively called eSEs.

The "smart secure platform (SSP)" can integratively support functions of the UICC and the eSE in a single chip, and may be divided into a removable SSP (rSSP) type, an embedded SSP (eSSP) type, and an integrated SSP (iSSP) type embedded into the SoC. The SSP may include one primary platform (PP) and at least one secondary platform bundle (SPB) operating in the PP, the primary platform including at least one of a hardware platform and a low-level operating system (LLOS) and the secondary platform bundle including at least one of a high-level operating system (HLOS) and an application executed in the HLOS. The second platform bundle may be called an SPB or a bundle. The bundle may access resources such as a central processing unit or a memory of the PP through a primary platform interface (PPI) provided by the PP and operate in the PP therethrough. A communication application such as a subscriber identification module (SIM), a universal SIM (USIM), or an IP multimedia SIM (ISIM) may be installed in the bundle, and various applications such as an electronic wallet, ticketing, an electronic passport, and a digital key may also be installed therein. In the disclosure, the SSP may also be called a smart secure element.

The SSP may be used for the UICC or the eSE according to a downloaded or installed bundle, and the UICC and the eSE may be interchangeably used through installation of a plurality of bundles in a single SSP and simultaneous operation thereof. That is, when a bundle including a profile operates, the SSP may be used for the UICC to access the network of the mobile communication service provider. The corresponding UICC bundle may operate by remotely downloading at least one profile to the bundle and selecting the same like the eUICC or the iUICC. Further, when the bundle including the service control module having the application capable of providing the service such as the electronic wallet, ticketing, electronic passport, or digital key operate on the SSP, the SSP may be used for the eSE. A plurality of service control modules may be integratively installed into one bundle to operate or may be installed in independent bundles to operate.

The SSP may download a bundle from an external bundle management server (secondary platform bundle manager (SPB manager)) and install the same through an over the air (OTA) technology or may receive a bundle from another terminal and install the same. In the disclosure, a method of installing a downloaded or received bundle may be equally applied to a removable SSP (rSSP) which can be inserted into or separated from the terminal, an embedded SSP (eSSP) installed in the terminal, and an integrated SSP (iSSP) included in an SoC installed in the terminal.

The "SSP ID" may be a unique identifier of the SSP embedded in the terminal and may be referred to as an sspID. Further, when the terminal and the SSP chip are not separated from each other in an embodiment of the disclosure, the SSP ID may be a terminal ID. In addition, the SSP ID may be a specific bundle ID (SPB ID) within the SSP. More specifically, the SSP ID may refer to an identifier of a management bundle for installing another bundle in the SSP and managing enabling, disabling, and deleting of the bundle or a bundle of a loader (secondary platform bundle loader (SPBL). The SSP may have a plurality of SSP IDs, and the plurality of SSP IDs may be values induced from a single unique terminal SSP ID.

The "secondary platform bundle (SPB)" operates using resources of the PP in the primary platform (PP) of the SSP and, for example, a UICC bundle may be a software package of an application, a file system, and an authentication key value stored in the existing UICC and an operating system (HLOS) for operating the same. In the disclosure, the SPB may be referred to as a bundle.

In the disclosure, a "state" of the bundle may be described below.

### [Enable]

In the disclosure, an operation in which a terminal or an external server enables a bundle may be an operation of changing the state of the corresponding SPB into an enabled state and allowing the terminal to receive services provided by the corresponding bundle (for example, a communication service, a credit card payment service, and a user authentication service through a communication service provider). The bundle in the enabled state may be expressed as an "enabled bundle". The enabled bundle may be stored in a storage space inside or outside the SSP while being encrypted.

### [Active]

In the disclosure, the enabled bundle may be changed into an active state according to an external input of the bundle (for example, a user input, push, a request of an application within the terminal, a request for authenticating a communication service provider, or a PP management message) or an internal operation of the bundle (for example, a timer or polling). The active bundle may be loaded from the storage space inside or outside the SSP from an internal driving memory of the SSP, and may process security information through a secure control device (secure CPU) within the SSP and provide a security service to the terminal.

### [Disabled]

In the disclosure, an operation in which the terminal or the external server disables the bundle may be an operation of changing the state of the corresponding bundle into a disabled state and preventing the terminal from receiving the service provided by the corresponding bundle. The bundle in the disabled state may be expressed as a "disabled bundle". The disabled bundle may be stored in a storage space inside or outside the SSP while being encrypted.

### [Deleted]

In the disclosure, an operation in which the terminal or the external server deletes the bundle may be an operation of changing the state of the corresponding bundle into a deleted state or deleting relevant data of the corresponding bundle including the corresponding bundle and preventing the terminal or the external server from activating, enabling, or disabling the corresponding bundle any more. The bundle in the deleted state may be expressed as a "deleted bundle".

A "bundle image (or image)" may be used interchangeably with a bundle, and may be used as the term indicating a data object of a specific bundle named a bundle tag, length, and value (TLV) or a bundle image TLV. When the bundle image is encrypted using an encryption parameter, the bundle image may be called a protected bundle image (PBI) or a protected bundle image TLV (PBI TLV). When the bundle image is encrypted using an encryption parameter which can be decrypted by a specific SSP, the bundle image may be called a bound bundle image (BBI) or a bound bundle image TLV (BBI TLV). The bundle image TLV may be a data set expressing information included in the bundle in the tag, length, and value (TLV) form.

A "bundle identifier" may be referred to as a factor that matches a bundle ID (SPB ID), a bundle family ID (SPB family ID), a bundle family manager ID (SPB family custodian object ID), a bundle matching ID, or an event ID. The SPB ID may indicate a unique ID of each bundle. The SPB family ID may indicate an identifier for identifying the bundle type (for example, a telecom bundle for accessing a mobile communication service provider network). In the disclosure, the bundle family ID may be referred to as spbFamilyId. The bundle family custodian object ID may indicate an identifier for identifying an entity that manages an SPB family ID (for example, a communication service provider, a terminal manufacturer, or a specific group). In the disclosure, the SPB family custodian object ID may be referred to as Oid. The bundle identifier may be used as a value indexed by the bundle by the bundle management server or the terminal.

"Bundle metadata" is the term indicating a set of information referring to or describing a bundle. The bundle metadata may include the bundle identifier. The bundle metadata may further include information on an attribute, a characteristic, or a configuration of the bundle. The bundle metadata may be expressed as "metadata".

The "profile" may be a data object such as an application, a file system, or an authentication key value stored in the UICC.

In the disclosure, a "profile package" may be a package of the content of the "profile" in a software form which can be installed in the UICC. The "profile package" may be named a profile package TLV. When the profile package is encrypted using an encryption parameter, the profile package may be a protected profile package (PPP) or a protected profile package TLV (PPP TLV). When the profile package is encrypted using an encryption parameter that can be decrypted by only a particular eUICC, the profile package may be a bound profile package (BPP) or a bound profile package (BPP) TLV. The profile package TLV may be a data set indicating information which configures a profile in a tag, length, and value (TLV) format. In the disclosure, a "profile image" may be binary data for which the profile packet is installed in the UICC. The "profile image" may be named a profile TLV or a profile image TLV. When the profile image is encrypted using an encryption parameter, the profile image may be named a protected profile image (PPI) or a protected profile image TLV (PPI TLV). When the profile image is encrypted using an encryption parameter that can be decrypted by only a particular eUICC, the profile image may be named a bound profile image (BPO) or a bound profile image (BPI) TLV. The profile image TLV may be a data set indicating information which configures a profile in a tag, length, and value (TLV) format. In the disclosure, a "state" of the profile may be described below.

### [Enable]

In the disclosure, an operation in which the terminal enables a profile may be an operation of changing the state of the corresponding profile into an enabled state and allowing the terminal to receive a communication service through a communication service provider providing the corresponding profile. The profile in the enabled state may be expressed as an "enabled profile".

### [Disable]

In the disclosure, an operation in which the terminal disables a profile may be an operation of changing the state of the corresponding profile into a disabled state and preventing the terminal from receiving a communication service through a communication service provider providing the corresponding profile. The profile in the disabled state may be expressed as a "disabled profile".

### [Delete]

In the disclosure, an operation in which the terminal deletes a profile may be an operation of changing the state of the terminal into a deleted state and preventing the terminal from enabling or disabling the corresponding profile any more. The profile in the deleted state may be expressed as a "deleted profile".

In the disclosure, an operation in which the terminal enables, disables, or deletes a profile may be an operation of first making the state of each profile as a state to be enabled, a state to be disabled, or a state to be deleted without immediately changing the state of each profile into an enabled state, a disabled state, or a deleted state, performing a specific operation (for example, a REFRESH or RESET command) by the terminal or the UICC of the terminal, and then changing the state of each profile into the enabled state, the disabled state, or the deleted state. The operation of marking a specific profile as a state to be changed (that is, a state to be enabled, a state to be disabled, or a state to be deleted) does not have be limited to marking one profile as one state to be changed, and one or more profiles may be marked as the same or different states to be changed, one profile may be marked as one or more states to be changed, or one or more profiles may be marked as the same or one or more different states to be changed.

When the terminal marks one or more states to be changed for a predetermined profile, marking of two states to be changed may be integrated into one state. For example, when a predetermined profile is marked as the state to be disabled and the state to be deleted, the corresponding profile may be marked as a state to be disabled and deleted.

Further, the operation in which the terminal marks states to be changed for one or more profiles may be performed sequentially or simultaneously. In addition, the operation in which the terminal marks states to be changed for one or more profiles and then actually changes the state of the profiles may be performed sequentially or simultaneously.

A profile identifier may be referred to as a factor that matches a profile ID, an integrated circuit card id (ICCID), a matching ID, an event ID, an activation code, an activation code token, a command code, a command code token, a signed command code, an unsigned command code, an ISD-P, or profile domain (PD). The profile ID may indicate a unique identifier of each profile. The profile identifier may further include an address of a profile provision server (SM-DP+) for indexing the profile. The profile identifier may further include a signature of the profile provision server (SM-DP+).

A "bundle management server" may include a function of generating a bundle by a request from a service provider or another bundle management server, encrypting the generated bundle, generating a bundle remote management command, or encrypting the generated bundle remote management command. The bundle management server providing the function may be expressed as at least one of a secondary platform bundle manager (SPBM), a remote bundle manager (RBM), an image delivery server (IDS), subscription manager data preparation (SM-DP), subscription manager data preparation plus (SM-DP+), a manager bundle server, managing subscription manager data preparation plus (SM-DP+), a bundle encryption server, a bundle generation server, a bundle provisioner (BP), a bundle provider, and a bundle provisioning credential (BPC) holder.

In the disclosure, the bundle management server may serve to download, install, or update the bundle in the SSP and manage a configuration of a key and a certificate for remotely manage the state of the bundle. The bundle management server providing the function may be expressed as at least one of a secondary platform bundle manager (SPBM), a remote bundle manager (RBM), an image delivery server (IDS), subscription manager secure routing (SM-SR), subscription manager secure routing plus (SM-SR+), an off-card entity of eUICC profile manager, a profile management credentials (PMC) holder, and an eUICC manager (EM).

In the disclosure, the subscription relay server may receive an event registration request (register event request or event register request) from one or more of the bundle management server and the subscription relay server. When one or more subscription relay servers may be complexly used, in which case the first subscription relay server may receive the event registration request not only from the bundle management server but also from the second subscription relay server. In the disclosure, the functions of the subscription relay server may be integrated into those of the bundle management server. The subscription relay server providing the function may be expressed as at least one of a secondary platform bundle manager (SPBM), a remote bundle manager (RBM), a secondary platform bundle discovery server (SPBDS), a bundle discovery server (BDS), a subscription manager discovery service (SM-DS), a discovery service (DS), a root SM-DS, and an alternative SM-DS.

In the disclosure, the bundle management server may refer to a sum of the function of generating the bundle or the bundle remote management command and encrypting and transmitting the same and the function of configuring the SSP and managing the installed bundle. Further, the bundle management server may refer to a sum of the functions of the subscription relay server. Accordingly, in various embodiments of the disclosure, the operation of the bundle management server and the subscription relay server may be performed by one bundle management server. Further, respective functions may be performed separately by a plurality of divided bundle management servers. In the specification of the disclosure, the bundle management server or the subscription relay server may be expressed as a bundle server. The bundle server may be one of the bundle management server and the subscription relay server or may be a device including both the bundle management server and the subscription relay server.

A "remote SIM provisioning (RSP) server may be used to refer to a profile provision server and/or a profile management server and/or a subscription relay server described below. The RSP server may be expressed as subscription manager (SM)-XX.

In the disclosure, a 'profile provision server' may include a function of generating a profile, encrypting the generated profile, generating a remote management command, or encrypting the generated profile remote management command. The profile provision server may be expressed as subscription manager data preparation (SM-DP), subscription manager data preparation plus (SM-DP+), an off-card entity of profile domain, a profile encryption server, a profile generation server, a profile provisioner (PP), a profile provider, and a profile provisioning credentials (PPC) holder.

In the disclosure, a "profile management server' may include a function of managing a profile. The profile management server may be expressed as subscription manager secure routing (SM-SR), subscription manager secure routing plus (SM-SR+), an off-card entity of eUICC profile manager, a profile management credentials (PMC) holder, an eUICC manager (EM), or a profile manager (PP).

In the disclosure, the profile provision server may be a sum of the functions of the profile management server. Accordingly, in various embodiments of the disclosure, the operation of the profile provision server may be performed by the profile management server. Similarly, the operation of the profile management server or the SM-SR may be performed by the profile provision server.

In the disclosure, the "subscription relay server" may be expressed as a subscription manager discovery service (SM-DS), a discovery service (DS), a root SM-DS, or alternative SM-DS. The subscription relay server may receive an event registration request (Register Event Request or Event Register Request) from one or more of the profile provision server and the subscription relay server. Further, more than one subscription relay server may be used together, in which case a first subscription relay server may receive an event registration request not only from the profile provision server but also from a second subscription relay server.

A "service provider" may be a company making a request for issuing requirements to the bundle management server to make a request for generating a bundle and providing a service to the terminal through the corresponding bundle. For example, the service provider may be a mobile operator providing a communication network access service through the bundle installed in a communication application or include all of a business supporting system (BSS), an operational supporting system (OSS), a point of sale (POS) terminal, and other IT systems of the mobile operator. In the disclosure, the service provider is not limited to express only one specific company, and may be used to refer to a group or an association (or consortium) of one or more companies or a representative representing the corresponding group or association. Further, in the disclosure, the service provider may be named an operator (OP or Op), a bundle owner (BO), or an image owner (IO), and each service provider may configure or receive allocation of at least one of a name and/or a unique identifier (object identifier (OID)). When the service provider refers to a group or an association of one or more companies or a representative, a predetermined group, association, name of representative, or unique identifier may be a name or a unique identifier shared by all companies belonging to the corresponding group or association or all companies cooperating with the corresponding representative.

A "mobile operator" may indicate a company providing a communication service to the terminal, and may include all of a business supporting system (BSS), an operational supporting system (OSS), a point of sale (POS) terminal, and other IT systems of the mobile operator. In the disclosure, the mobile operator is not limited to express only one specific company providing the communication service, and may be used to refer to a group or an association (or consortium) of one or more companies or a representative representing the corresponding group or association. Further, in the disclosure, the mobile operator may be named an operator (OP or Op), a mobile network operator (MNO), a mobile virtual network operator (MVNO), a service provider (or SP), or a profile owner (PO), and each mobile operator may configure or receive allocation of at least one of a name and/or a unique identifier (object identifier (OID)) of the mobile operator. When the mobile operator refers to a group or an association of one or more companies or a representative, a predetermined group, association, name of representative, or unique identifier may be a name or a unique identifier shared by all companies belonging to the corresponding group or association or all companies cooperating with the corresponding representative.

A "subscriber" may be used to refer to a service provider having the ownership of the terminal or a user (end user) having the ownership of the terminal. In general, the former may be named a M2M terminal (M2M device) and the later may be named a user terminal (consumer device). In the case of the M2M terminal, there may be a user (end user) who does not have the ownership of the terminal but takes over or rents the terminal from the service provider to use the terminal, in which case the user may be the same as or different from the service provider.

A "subscriber intent" may be used to refer to an intent to locally or remotely manage the bundle by the subscriber. The subscriber intent may be a user intent (end user intent) in the case of local management, and may be a service provider intent in the case of remote management.

A "user consent (end user consent)" may be used to indicate whether the user agrees with local management or remote management.

The 'terminal' may be referred to as a user equipment (UE), a mobile station (MS), a user terminal (UT), a wireless terminal, an access terminal (AT), a terminal, a subscriber unit, a subscriber station (SS), a wireless device, a wireless communication device, a wireless transmission/reception unit (WTRU), a moving node, a mobile device, or another term. Various embodiments of the terminal may include a cellular phone, a smart phone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a home appliance that has a wireless communication function for storing and reproducing music, an Internet home appliance capable of performing wireless Internet access and browsing, and portable units or terminals having integrated combinations of the functions thereof. Furthermore, the terminal may include, but is not limited to, a machine-to-machine (M2M) terminal and a machine-type communication (MTC) terminal/device. In the disclosure, the terminal may be referred to as an electronic device.

In the disclosure, an SSP which can download and install a bundle may be embedded into the electronic device. When the SSP is not embedded into the electronic device, the SSP physically separated from the electronic device may be inserted into and connected to the electronic device. For example, the SSP may be inserted into the electronic device in a card form. The electronic device may include a terminal, and at this time, the terminal may be a terminal including an SSP which can download and install a bundle. The SSP can be embedded into the terminal and also be inserted into the terminal when the terminal and the SSP are separated from each other, and the inserted SSP may be connected to the terminal.

In the disclosure, a UICC which can download and install a profile may be embedded into the electronic device. When the UICC is not embedded into the electronic device, the UICC physically separated from the electronic device may be inserted into the electronic device and connected thereto. For example, the UICC may be inserted into the electronic device in a card form. The electronic device may include a terminal and, at this time, the terminal may be a terminal including a UICC which can download and install a profile. The UICC may be embedded into the terminal, and also be inserted into the terminal when the terminal and the UICC are separated from each other, and the inserted UICC may be connected to the terminal. The UICC that can be installed by downloading the profile may be, for example, an eUICC.

A "local bundle assistant (LBA)" may refer to software or an application installed in the terminal or the electronic device to control the SSP. The software or application may be referred to as a local bundle management (LBM).

A "loader (secondary platform bundle loader (SPBL))" may refer to a management bundle for managing installation, enabling, disabling, and deletion of another bundle in the SSP. The LBA of the terminal or a remote server may install, enable, disable, or delete a specific bundle through the loader. In the disclosure, the operation of the loader may be described as the operation of the SSP including the loader.

A "local profile assistant (LPA)" may refer to software or an application installed in the terminal or the electronic device to control the UICC or the eUICC by the terminal or the electronic device.

An "event" may be used for the following purpose in the disclosure.

### [Used in connection with bundle]

The "event" may collectively indicate bundle download, remote bundle management, or management/processing instructions of other bundles or the SSP. The event may be named remote bundle provision operation (remote bundle provisioning operation or RBP operation), or event record, and each event may be referred to as data including one or more of an event identifier (event ID or EventID), a matching identifier (matching ID or MatchingID), an address (FQDN, IP address, or URL) of the bundle management server or the subscription relay server storing the corresponding event, or each server identifier. The bundle download may be interchangeably used with bundle installation. The "event type" may be used as a term indicating whether a particular event is bundle download, remote bundle management (for example, delete, enable, disable, change, update, or the like), or may indicate a management/processing command of another bundle or the SSP, and may be named operation type (OperationType), operation class (OperationClass), event request type, event class, or event request class.

"Local bundle management (LBM)" may be named bundle local management, local management, a local management command, a local command, a local bundle management (LBM) package, a bundle local management package, a local management package, a local management command package, or a local command package. The LBM may be used for installing a predetermined bundle through software installed in the terminal, changing the state of a specific bundle (enabled, disabled, or deleted), or changing (updating) the content of the specific bundle (for example, a bundle nickname or bundle abstract information (bundle metadata)). The LBM may include one or more local management commands in which case bundles subject to the local management commands may be the same as or different according to the local management command.

The "remote bundle management (RBM)" may be bundle remote management, remote management, a remote management command, a remote command, a remote bundle management (RBM) package, a bundle remote management package, a remote management package, a remote management command package, or a remote command package. The RBM may be used for installing a predetermined bundle, changing the state of a specific bundle (enabled, disabled, or deleted), or changing (updating) the content of the specific bundle (for example, a bundle nickname or bundle abstract information (bundle metadata)). The RBM may include one or more remote management commands, and bundles subject to the remote management commands may be the same or different according to the remote management command.

A "target bundle" may be used to indicate a bundle subject to the local management command or the remote management command.

A "bundle rule" may be used to indicate information which the terminal should identify when performing local management or remote management on the target bundle. Further, the bundle rule may be interchangeably used with a bundle policy, a rule, or a policy.

### [Used in connection with profile]

The "event" may be the term collectively indicating profile download, remote profile management, and management/processing instructions of other profiles or the eUICC. The event may be named remote SIM provision operation (remote SIM provisioning operation or RSP operation), or event record, and each event may be referred to as data including one or more of an event identifier (event ID or EventID) corresponding thereto, a matching identifier (matching ID or MatchingID), and an address (FQDN, IP address, or URL) of the profile provision server (SM-DP+) or the subscription relay server (SM-DS) storing the corresponding event, signature of the profile provision server (SM-DP+) or the subscription relay server (SM-DS), or a digital certificate of the profile provision server (SM-DP+) or the subscription relay server (SM-DS).

Data corresponding to the event may be referred to as a "command code". Some or all of the procedure using the command code may be referred to as a "command code processing procedure", a "command code procedure", or a "local profile assistant application programming interface (LPA API)". The profile download may be interchangeably used with "profile installation".

The "event type" may be used as a term indicating whether a particular event is profile download, remote profile management (for example, delete, enable, disable, change, update, or the like), or may indicate a management/processing command of another profile or the eUICC, and may be named operation type (OperationType), operation class (OperationClass), event request type, event class, or event request class. With respect to a predetermined event identifier (EventID or MatchingID), a path through which the terminal acquires the corresponding event identifier (EventID or MatchingID) or the use thereof (EventID Source or MatchingID Source) may be designated.

"Local bundle management (LBM)" may be named profile local management, local management, a local management command, a local command, a local profile management (LPM) package, a profile local management package, a local management package, a local management command package, or a local command package. The LPM may be used for changing the state of a particular profile (enabled, disabled, or deleted) through software installed in the terminal or updating the content of a particular profile (for example, a profile nickname or profile abstract information (profile metadata or the like). The LPM may include one or more local management commands in which case profiles subject to the local management commands may be the same or different according to the local management command.

"Remote profile management (RPM)" may be named profile remote management, remote management, a remote management command, a remote command, an RPM package, a profile remote management package, a remote management package, a remote management command package, or a remote command package. The RPM may be used to change the state of a particular profile (enabled, disabled, or deleted) or to change (update) the content of a particular profile (for example, a profile nickname or profile abstract information (profile metadata). The RPM may include one or more remote management commands, in which case the profiles pertaining to each remote management command may be the same as or different from each other according to the remote management command.

A "certificate" or a digital certificate may be a digital certificate used for mutual authentication based on an asymmetric key including a pair of a public key (PK) and a secret key (SK). Each certificate may include one or more PKs, a public key identifier (PKID) corresponding to the respective PKs, the ID of the certificate issuer (CI) that issues the corresponding certificate, and a digital signature. The certificate issuer may be a certification issuer, certificate authority (CA), or certification authority. In the disclosure, the public key (PK) and the public key identifier (PKID) may be interchangeably used to indicate a particular public key, a certificate including the corresponding public key, part of the particular public key, part of the certificate including the corresponding public key, the value of a calculation result (for example, a hash) of the particular public key, the value of a calculation result (for example, hash) of the certificate including the corresponding public key, the value of a calculation result (for example, a hash) of the part of the particular public key, the value of a calculation result (for example, a hash) of the part of the certificate including the corresponding public key, or a storage space storing the data.

"Certificate chain" or certificate hierarchy may be used to issue other certificates (secondary certificates) of certificates (primary certificates) issued by the "certificate issuer" or may indicate, when the secondary certificates are used to hierarchically issue tertiary or higher certificates, the correlation between the corresponding certificates. At this time, a CI certificate used for initially issuing the certificate may be named a root of certificate, the highest certificate, a root CI, a root CI certificate, a root CA, or a root CA certificate.

In the description of the disclosure, if it is determined that a detailed description of a relevant known function or configuration makes the subject of the disclosure unclear, the detailed description is omitted.

Hereinafter, various embodiments of a method and an apparatus for moving and installing a bundle between terminals are described.

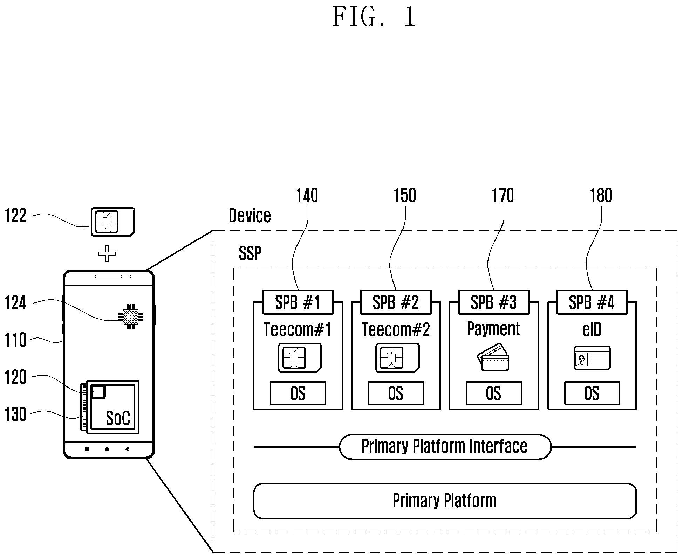

FIG. 1 is a conceptual diagram of an SSP according to an embodiment of the disclosure.

According to various embodiments, as illustrated in the example of FIG. 1, a terminal 110 may include an SSP 120. For example, the SSP 120 may be embedded into an SoC 130 of the terminal 110. At this time, the SoC 130 may be a communication processor, an application processor, or a processor into which the two processors are integrated. In another example, the SSP 120 may be a removable type 122 in an independent chip form that is not integrated into the SoC or an embedded type 124 that is pre-embedded into the terminal 110.

According to various embodiments, the SSP 120 included in the terminal may include at least one of one or more telecom bundles, one or more payment bundles, or one or more electronic identification bundles. For example, as illustrated in FIG. 1, when a plurality of telecom bundles 140 and 150 are included in the SSP 120, the terminal 110 may operate the plurality of telecom bundles 140 and 150 simultaneously or in a time division manner to use a mobile communication network according to a configuration. Further, when the payment bundle 170 and the electronic identification bundle 180 are included in the SSP 120, the terminal 110 may use online payment through a terminal app or offline payment through an external credit card point of sale (PoS) device using the payment bundle 170 and authenticate identity of an owner of the terminal using the electronic identification bundle 180.

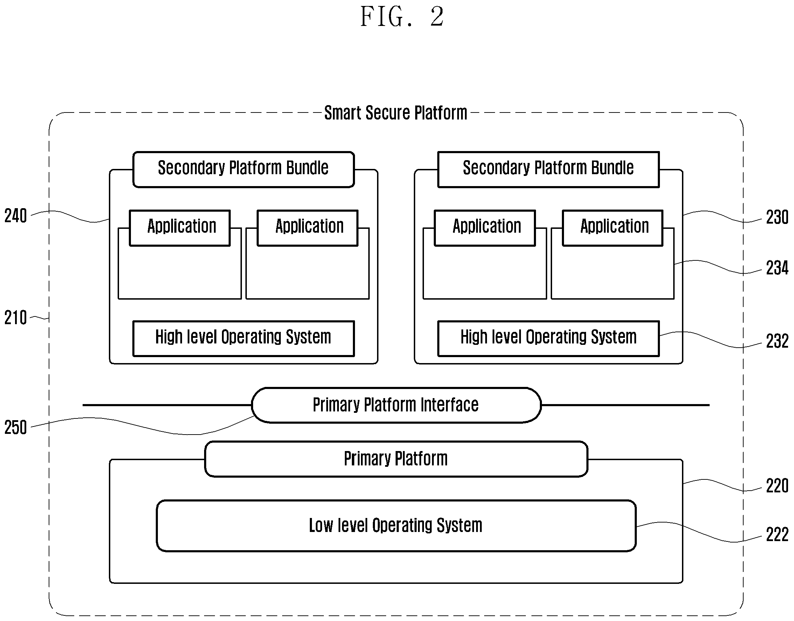

FIG. 2 is a conceptual diagram illustrating an internal structure of a smart secure platform (SSP) according to an embodiment of the disclosure.

According to various embodiments, as illustrated in the example of FIG. 2, an SSP 210 may include one primary platform (PP) 220 and at least one secondary platform bundle (SPB) 230 and 240 operating thereon.

According to various embodiments, the primary platform 220 may include hardware (not shown) and at least one low-level operating system (LLOS) 222.

According to various embodiments, the secondary platform bundle 230 may include a high-level operating system (HLOS) 232 and at least one application 234 operating thereon.

According to various embodiments, each of the secondary platform bundles 230 and 240 may access resources such as the central processing unit and the memory of the primary platform 220 through a primary platform interface (PPI) 250 and operate on the SSP 210 therethrough.

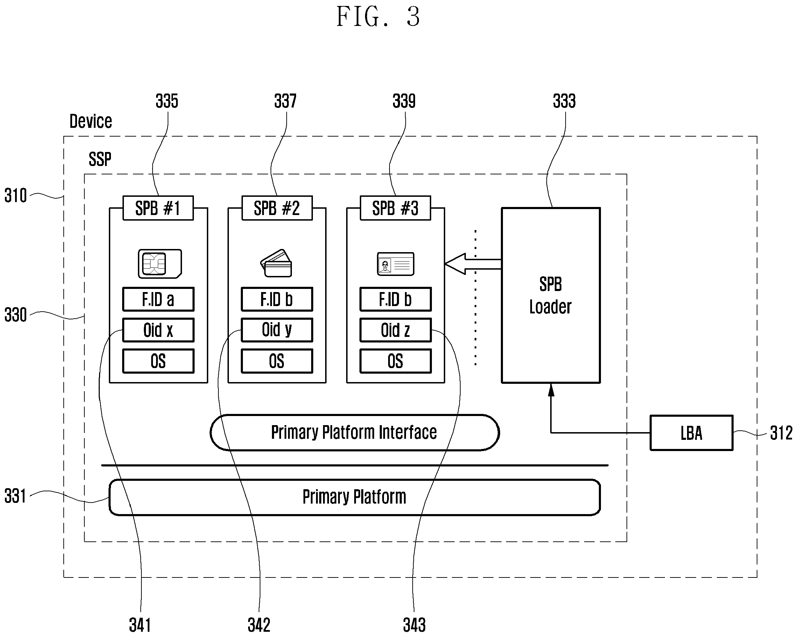

FIG. 3 illustrates an example of internal elements of the terminal through which the terminal downloads and installs bundles in the SSP according to an embodiment of the disclosure.

According to various embodiments, as illustrated in the example of FIG. 3, a terminal 310 may include an SSP 330 and/or an LBA 312 for controlling the SSP 330. For example, the terminal 310 may be a terminal in which the SSP 330 is installed and the LBA 312 for controlling the SSP 330 is installed. For example, the SSP 330 may be embedded into or removable from the terminal 310.

According to various embodiments, the SSP 330 may include a primary platform 331, a secondary platform bundle loader (SPBL) 333, and at least one of one or more secondary platform bundles 335, 337, and 339.

According to various embodiments, the secondary platform bundle 335, 337, or 339 may be remotely downloaded and installed after released without being installed in the SSP 330 when the terminal is released.

According to various embodiments, as illustrated in the example of FIG. 3, each bundle may have a different bundle family identifier and/or a bundle family manager identifier 341, 342, or 343. The bundle family identifier and the bundle family manager identifier may be used as information required for downloading and installing the bundle. That is, the SSP 330 or the SPBL 333 may allow or reject the download and installation of a specific bundle according to the bundle family identifier and the bundle family manager identifier.

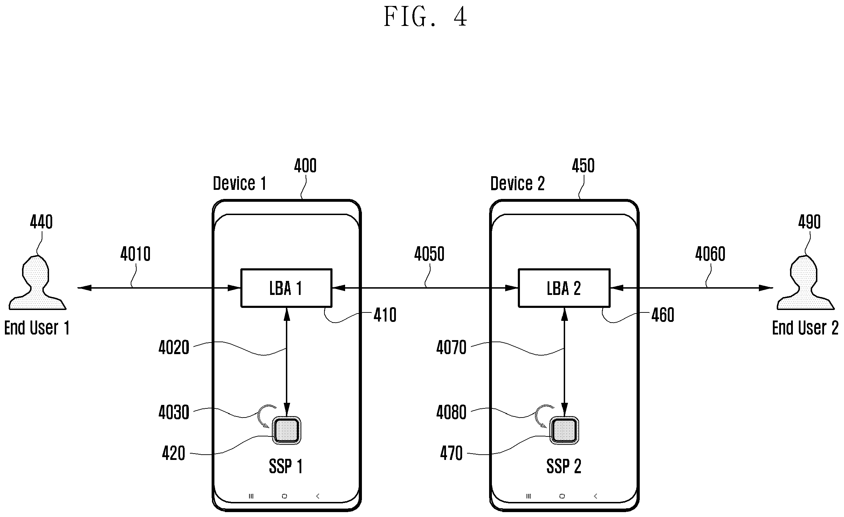

FIG. 4 illustrates an example of a method by which two terminals interact with each other in order to transmit bundles to each other according to an embodiment of the disclosure.

According to various embodiments, the terminal may include at least one LBA and at least one SSP. For example, as illustrated in the example of FIG. 4, a first terminal 400 may include an LBA 410 and an SSP 420, and a second terminal 450 may include an LBA 460 and an SSP 470.

According to various embodiments, the user may transmit a command to the terminal or receive information which the user should receive from the terminal. For example, as illustrated in operations 4010 to 4060, first/second users 440 and 490 may transmit commands to the LBAs 410 and 460 of the first/second terminals 400 and 450 or receive information which the users should receive from the LBAs 410 and 460.

According to various embodiments, the operations may include a process in which the user selects a bundle to be transmitted. Further, the operations may further include a process in which the user identifies information of the bundle to be transmitted. The operations may further include an operation in which the user permits transmission of the bundle to be transmitted. The operations may further include an operation in which the user permits transmission of the bundle to be received. All the selecting and permitting operations may not be operated as independent operations or one or more thereof may be independently selected and operated.

Further, in operations 4020 to 4070, the LBAs 410 and 460 may transmit commands to the SSPs 420 and 470 or transmit/receive data to/from the SSPs 420 and 470.

According to an embodiment, in the operations, the LBA may receive the user's command and transfer the command to the SSP. In the operations, when the LBA receives the user's command and transfers the command to the SSP, the LBA may receive a result transmitted from the SSP as the result thereof.

According to another embodiment, in the operations, the LBA may transfer a command or data received from another terminal or an external server to the SSP. In the operations, when the LBA transfers the command or data received from another terminal or the external server to the SSP, the LBA may receive a result transmitted from the SSP as the result thereof.

According to various embodiments, in the operations, the LBA may define a new command and data on the basis of the user's command, or the command or data received from another terminal or the external server and transfer the same to the SSP. In the operations, when the LBA defines a new command and data on the basis of the user's command, or the command or data received from another terminal or the external server and transfers the same to the SSP, the LBA may receive a result transmitted from the SSP as the result thereof.

According to various embodiments, in the operations, the LBA and the SSP may transmit and receive data to and from each other and install a bundle.

According to various embodiments, in operation 4050, two LBAs 410 and 460 may be connected to each other and transmit commands to each other or transmit/receive data to/from each other. At this time, the connection in operation 4050 may be a direct device-to-device connection between terminals or may be an indirect device-to-device connection through an external entity (for example, an external server) between two LBAs although not illustrated.

A more detailed description of the connection method between two LBAs is made with reference to drawings described below.

According to various embodiments, in operations 4030 to 4080, the SSPs 420 and 470 may generate, process, or verify data required inside the SSP.

According to various embodiments, in the operations, the SSP may identify or update a bundle tranfer configuration. Further, in the operations, the SSP may generate and use a bundle tranfer code. The operation related to the bundle moment configuration and the operation related to the bundle tranfer code are independent functions, and all the two functions may not be performed, only one thereof may be performed, or both the two functions may be performed. Even when both the two functions are performed, the two functions may be performed as completely independent functions.

A more detailed method of identifying or updating the bundle tranfer configuration and a more detailed method of generating and using the bundle tranfer code are described with reference to drawings below.

According to various embodiments, in the operations, the SSP may generate its own SSP information or verify SSP information received from a counterpart terminal. Further, in the operations, the SSP may generate authentication data for verifying itself or verify authentication data received from a counterpart terminal.

According to various embodiments, in the operations, the SSP may generate a bundle.

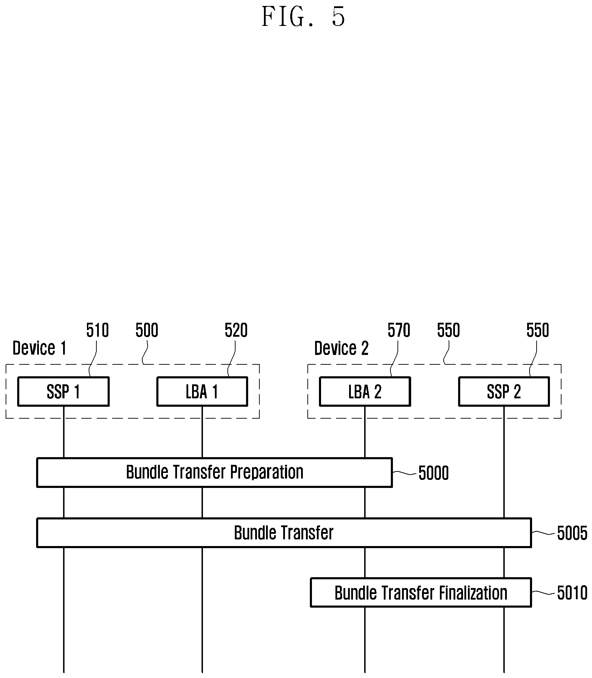

FIG. 5 conceptually illustrates a procedure of transmitting a bundle from one terminal to another terminal according to an embodiment of the disclosure.

According to various embodiments, the terminal may include at least one LBA and at least one SSP. For example, as illustrated in the example of FIG. 5, a first terminal 500 may include a first LBA 510 and a first SSP 520, and a second terminal 550 may include a second LBA 560 and a second SSP 570. For example, the first terminal 500 may be a terminal in which the first SSP 510 is installed and the first LBA 520 for controlling the first SSP 510 is installed, and the second terminal 550 may be a terminal in which the second SSP 560 is installed and the second LBA 570 for controlling the second SSP 560 is installed.

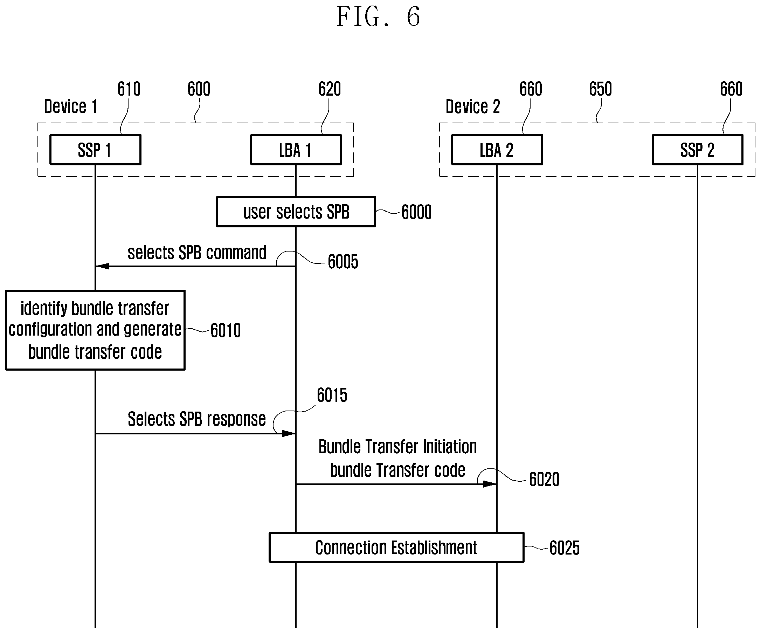

Referring to FIG. 5, in operation 5000, the first SSP 510 and the first LBA 520 of the first terminal 500 and the second LBA 570 of the second terminal 550 may perform a preparation procedure (bundle transmission preparation procedure) required for transmitting a bundle. A detailed description of the procedure is made with reference to a detailed description of FIG. 6 below.

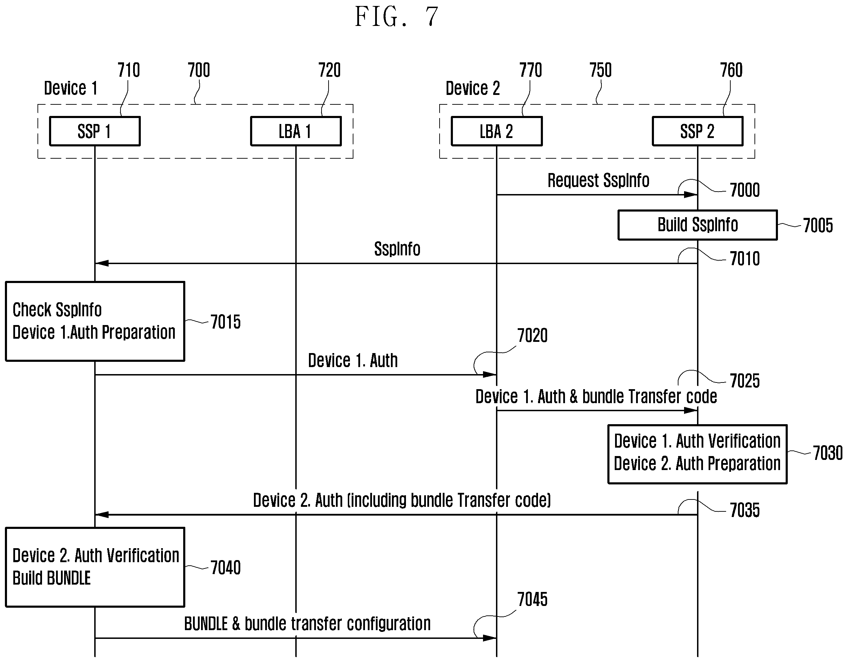

Referring to FIG. 5, in operation 5005, a procedure (bundle transmission procedure) of transmitting a bundle from the first terminal 500 to the second terminal 550 may be performed. A detailed description of the procedure is made with reference to a detailed description of FIG. 7 below.

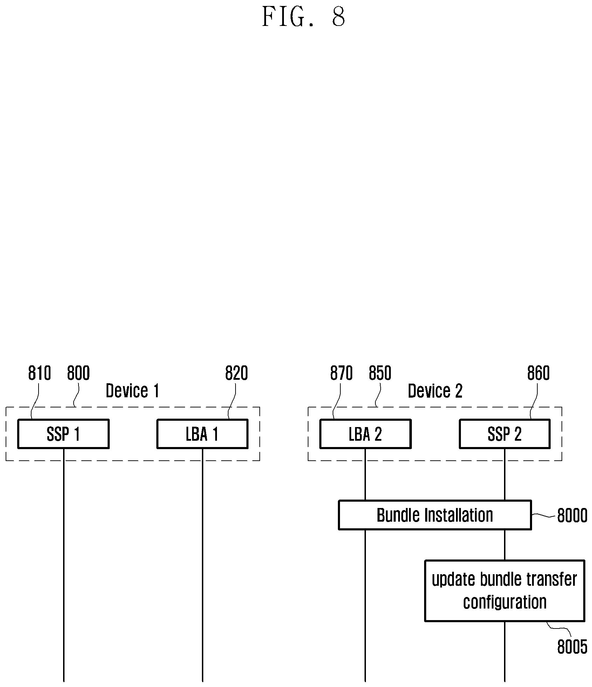

Referring to FIG. 5, in operation 5010, a procedure of installing the bundle transmitted to the second terminal 550 in the second terminal 550 (bundle installation procedure) may be performed. A detailed description of the procedure is made with reference to a detailed description of FIG. 8 below.

FIG. 6 illustrates a detailed procedure of the bundle transmission preparation procedure among the procedures presented in FIG. 5. More specifically, FIG. 6 illustrates an example of a procedure of a preparation process required for transmitting a bundle from one terminal to another terminal according to an embodiment of the disclosure. In this specification, the procedure of FIG. 6 may be referred to as a bundle transmission preparation procedure.

According to various embodiments, the terminal may include at least one LBA and at least one SSP. For example, as illustrated in the example of FIG. 6, a first terminal 600 may include a first LBA 610 and a first SSP 620, and a second terminal 650 may include a second LBA 660 and a second SSP 670. For example, the first terminal 600 may be a terminal in which the first SSP 610 is installed and the first LBA 620 for controlling the first SSP 610 is installed, and the second terminal 650 may be a terminal in which the second SSP 660 is installed and the second LBA 670 for controlling the second SSP 660 is installed.

According to various embodiments, the first terminal 600 may have a pre-installed bundle. The bundle may be stored in the first SSP 610 or the first LBA 620, or stored in a memory rather than the first SSP 610 and the first LBA 620 although not illustrated in FIG. 6, or may be overlappingly stored in at least one space among the first SSP 610, the first LBA 620, and the external memory. The bundle may be divided and stored in a combination of at least two of the first SSP 610, the second LBA 620, and the external memory in which case there may be duplicate information between the divided bundles. All or some of the stored bundles may be encrypted and may further include signature information.

According to various embodiments, the first terminal 600 may further have metadata associated with the bundle. The metadata may be stored in the first SSP 610 or the first LBA 620, may be stored in a memory rather than the first SSP 610 and the first LBA 620 although not illustrated in FIG. 6, or may be overlappingly stored in at least one space among the first SSP 610, the first LBA 620, or the external memory. Further, the metadata may be divided and stored in a combination of at least two of the first SSP 610, the second LBA 620, and the external memory in which case there may be duplicate information between the divided information. In addition, all or some of the stored metadata may be encrypted and may further include signature information.

According to various embodiments, the first terminal 600 may be associated with the corresponding bundle and may have at least one of a bundle identifier (SPB ID), a bundle family identifier (SPB family ID), or a bundle family manager identifier (SPB family custodian object ID). The identifier information may exist within the bundle, within metadata, or an independent area rather than the bundle and the metadata, or may be overlappingly divided and stored in the bundle, the metadata, and the independent area. Further, the identifier information may be encrypted or may further include signature information thereof.

According to various embodiments, the first terminal 600 may be associated with the corresponding bundle and may have a `bundle tranfer configuration'. The bundle tranfer configuration may include a `bundle tranfer policy'. The bundle tranfer configuration may further include a `bundle tranfer history'. The `bundle tranfer configuration' may exist within the bundle, within the metadata, or within the independent area rather than the bundle and the metadata, or may be overlappingly divided and stored in the bundle, the metadata, and the independent area. The bundle tranfer configuration may be encrypted or may further include signature information thereof.

According to various embodiments, the `bundle tranfer configuration' may be acquired at a necessary time point in the state in which the bundle tranfer configuration is not pre-occupied by the terminal. At this time, the `bundle tranfer configuration' may be generated by a service provider, a bundle management server, or cooperation between the service provider and the bundle management server by a request from the terminal and transmitted to the terminal. Alternatively, the `bundle tranfer configuration' may be generated by cooperation between the terminal and at least one of the service provider and the bundle management server.

According to various embodiments, the `bundle tranfer configuration' within the terminal may be updated by the service provider, the bundle management server, or cooperation between the service provider and the bundle management server. Alternatively, `bundle tranfer configuration' may be updated by cooperation between the terminal and at least one of the service provider and the bundle management server. A time point and a method of the update may be determined by a policy of the service provider, the bundle management server, or a terminal manufacturing company.

According to various embodiments, the `bundle tranfer policy' is a policy indicating whether the bundle can transfer between devices and may be generated by the service provider who is an initial provider of the bundle, the bundle management server, or cooperation between the service provider and the bundle management server. The `bundle tranfer policy' may selectively include a factor (or indication) indicating whether tranfer of the corresponding bundle between devices is allowed.

When transmission of the corresponding bundle between devices is allowed, the `bundle tranfer policy' may selectively further include a factor indicating conditions under which the transmission is allowed.

The factor indicating the conditions under which the transmission is allowed may include, for example, a maximum number of allowed transmissions of the corresponding bundle between devices, a period during which the transmission of the corresponding bundle between devices is allowed, or a maximum number of transmissions of the corresponding bundle allowed within a specific period.

In another example of the factors, a factor indicating whether permission of the service provider and/or the bundle management server is needed before transmission of the bundle between devices may be included. When permission of the service provider and/or the bundle management server is needed before transmission of the bundle between devices, a process of receiving the permission may be performed as a portion of operation 6000 and/or operation 6010 and/or operation 7015 and/or operation 7040. A detailed procedure of the process is described with reference to drawings described below. However, the process of receiving permission of the service provider and/or the bundle management server does not have to be performed as the portion of operation 6000 and/or operation 6010 and/or operation 7015 and/or operation 7040, but may be performed at a predetermined moment during the procedures illustrated in FIG. 6 and/or FIG. 7. Information indicating when the permission should be received from the service provider and/or the bundle management server may also be included as a portion of the `bundle tranfer policy'.

Further, in another example of the factors, a factor indicating an allowed bundle tranfer method between devices may be included. For example, as a bundle tranfer method between devices, a factor indicating whether online tranfer and/or offline tranfer is allowed may be included. When both the online tranfer and the offline tranfer are allowed, information indicating which tranfer method between devices is preferred may be included. When both the online tranfer and the offline tranfer are allowed, information indicating whether, when one method fails, another method can be automatically executed may included. When both the online tranfer and the offline tranfer are allowed, information indicating whether, when one method fails, a user's consent should be obtained to perform another method may be included. When bundle tranfer between devices fails, information indicating whether re-provisioning can be performed may be included. Information indicating whether re-provisioning can be performed when online or offline tranfer between devices fails may be included. At this time, information indicating whether re-provisioning can be automatically executed may also be included. Information indicating whether a user's consent should be obtained to execute re-provisioning may be included. When all of the online tranfer, the offline tranfer, and the re-provisioning are allowed, a configuration for sequences of the respective methods may be included When the offline tranfer is first attempted and then fails, the online tranfer may be attempted, and when the online tranfer also fails, the re-provisioning may be attempted. However, this is only an example, the sequences of the online tranfer, the offline tranfer, and the re-provisioning may be configured through various methods. When the online tranfer, the offline tranfer, and the re-provisioning are performed in a predetermined order, information indicating whether the continuous performance may be automatically conducted may be included. Alternatively, when the online tranfer, the offline tranfer, and the re-provisioning are performed in a predetermined order, a factor indicating whether a user's consent should be obtained whenever the continuous performance is conducted may be included.

As another example of the factors, the following description may be further included. Information indicating whether a notification related to bundle tranfer should be transmitted to the service provider and/or the bundle management server may be included. Information indicating whether the corresponding bundle can be used by a plurality of terminals may be included. Information indicating whether, when the terminal to transmit the bundle authenticates the terminal to receive the bundle, additional authentication should be performed using information received from the service provider and/or the bundle management server may be included. That is, the service provider and/or the bundle management server may provide reliable authentication information related to the terminal and/or the SSP and the terminal to transmit the bundle may authenticate whether the terminal to receive the bundle is a terminal which can be trusted by the service provider and/or the bundle management server on the basis of the information.

As another example of the factors, the following description may be further included. Information indicating whether information on the terminal to receive the bundle should be additionally received before the terminal to transmit the bundle transmits the bundle may be included. At this time, the 'information on the terminal to receive the bundle' to be additionally received may be directly input by the user or may be input by an external server, or may be input by the terminal to receive the bundle through communication between two terminals. Information indicating whether additional know your customer (KYC) authentication of the user is needed may be included to configure the bundle to be transmitted to be a state which can be used by the terminal to receive the bundle. At this time, the additional KYC authentication may be performed in various methods. For example, the KYC authentication may be performed through methods such as a call and/or ARS authentication and/or a text message. Alternatively, the KYC authentication may be performed through communication with the service provider and/or the bundle management server as the user controls the terminal. Alternatively, the authentication may be performed as the terminal receiving the bundle communicates with the service provider and the bundle management server without any involvement of the user.

According to various embodiments, the `bundle tranfer history' is information in which a transmission history of the bundle between devices performed in the past is recorded. For example, the `bundle tranfer history' may selectively include a date and a time of the bundle tranfer. The `bundle tranfer history' may further selectively include information on a number of bundle tranfers. The `bundle tranfer history' may further selectively include at least one of information on the terminal transmitting the bundle or information on the terminal receiving the bundle. When the bundle has never been transmitted between devices and is initially installed in the first terminal 600, the bundle tranfer history may be configured by the first terminal, the service provider who is a provider of the bundle, the bundle management server, or cooperation between at least two of the first terminal, the service provider, and the bundle management server. When the bundle has been transmitted between devices in the past, the bundle tranfer history may be configured by the first terminal, an old terminal having transmitted the bundle to the first terminal in the past, a service provider who is an initial provider of the bundle, the bundle management server, or cooperation between at least two of the first terminal, the old terminal, the service provider, and the bundle management server.

Referring to FIG. 6, in operation 6000, information on a bundle to be transmitted between devices may be transferred to the first LBA 620. Such a transfer process may be performed through a process in which the user directly selects the bundle through the UI provided by the first terminal 600 as illustrated in FIG. 6 or may be input into the first LBA 620 through a push input from the remote server, or the first LBA 620 may access the remote server to read corresponding information. When the first terminal 600 provides the UI to the user, a list of all bundles installed in the terminal may be provided through the UI or only a list of bundles which can currently transfer may be provided. When a list of bundles which cannot currently transfer is provided, information indicating possibility of tranfer of the bundles in the list may be additionally provided. Further, information on bundles or information on a tranfer policy of bundles may be further provided through the UI as well as the list of the bundles.

In operation 6000, the first LBA 620 may identify whether the corresponding bundle can be transmitted between devices on the basis of the `bundle tranfer configuration'. The first LBA 620 may identify a method of transmitting allowed bundles between devices through the `bundle tranfer configuration'. For example, the type of connections which can be made between devices for bundle transmission may be identified.

The first LBA 620 may identify whether necessity of permission of the service provider and/or the bundle management server is configured in the `bundle tranfer configuration' before the bundle is transmitted. If the necessity is configured, the first terminal 600 may access a server managed by the service provider and/or the bundle management server, and/or a server managed by cooperation between the service provider and the bundle management server (hereinafter, referred to as a 'server') to make a request for permitting transmission of the bundle between devices. At this time, the first terminal 600 may provide information related to the bundle (for example, bundle identifier such as a bundle identifier (SPB ID), a bundle family identifier (SPB family ID), and a bundle family manager identifier (SPB family custodian object ID), or other information indicating attributes of the bundle (for example, metadata of the bundle or some of the metadata) to the 'server'. In such a processor, a mutual authentication process between the first terminal and the server may be further included. If the server does not permit transmission of the corresponding bundle between devices, the bundle transmission procedure may be stopped.

Further, the first LBA 620 may identify whether information on the terminal to receive the bundle should be additionally received before the terminal, which identifies the `bundle tranfer configuration' to transmit the bundle, transmits the bundle. If the necessity is configured, the first LBA 620 may receive information ssp2.info on the terminal to receive the bundle. Ssp2.info may be information referring to a second terminal. Ssp2.info may be an SSP identifier of the second SSP 660. Ssp2.info may be a series of information bound with the SSP identifier of the second SSP 660. Ssp2.info may be a series of character strings and/or codes bound with the SSP identifier of the second SSP 660. The user may directly input ssp2.info through the first LBA 620. In another available method of inputting ssp2.info, the information may be input through the server or may be input through communication between the second terminal 650 and the first terminal 600.

The first LBA 620 may generate `bundle transmission information'. The bundle transmission information may include bundle identifiers such as a bundle identifier (SPB ID) of the bundle to be transmitted, a bundle family identifier (SPB family ID), and a bundle family manager identifier (SPB family custodian object ID). Further, the bundle transmission information may further include other information indicating attributes of the bundle (for example, metadata of the bundle or some of the metadata). The bundle transmission information may include an address of a bundle management server (SPBM Addr) associated with the bundle to be transmitted. The bundle transmission information may include information required for the connection between two terminals made in operation 6025. For example, information required for the Wi-Fi connection between two terminals (for example, an SSID and/or a BSSID of the second terminal 650, a pre shared key to be used for authenticating the connection between two terminals, an IP address of the second terminal 650, and a port number to be used for communication between two terminals) may be included.

Referring to FIG. 6, in operation 6005, information related to the bundle selected in operation 6000 may be transferred from the first LBA 620 to the first SSP 610. For example, as illustrated in FIG. 6, information related to the selected bundle may be transferred from the first LBA 620 to the first SSP 610 through a select SPB command. At this time, information transferred from the first LBA 620 to the first SSP 610 may include information for identifying the bundle selected in operation 6000. The information for identifying the bundle may be a bundle identifier (SPB ID) or another identifier for identifying the bundle identifier. Further, the information transferred from the first LBA 620 to the second SSP 610 may further selectively include a bundle identifier such as a bundle family identifier (SPB family ID) or a bundle family manager identifier (SPB family custodian object ID) or other information indicating attributes of the bundle (for example, metadata of the bundle or some of the metadata).

Referring to FIG. 6, in operation 6010, the first SSP 610 may identify whether the bundle requested to be transmitted can be transmitted between devices. The process may be performed by identifying the bundle requested to be transmitted on the basis of the information received in operation 6005 and identifying a `bundle tranfer configuration' associated with the corresponding bundle. In the process, the first SSP 610 may identify conditions under which the bundle can be transmitted between devices on the basis of the `bundle tranfer policy' and compare the `bundle tranfer history' and the `bundle tranfer policy' as necessary to confirm whether the bundle can be currently transmitted between devices.

In the operation, some examples of the procedure of determining whether the bundle can be currently transmitted between devices on the basis of the `bundle tranfer configuration' are described below. For example, when the `bundle tranfer policy' includes a factor indicating whether transmission of the corresponding bundle between devices is allowed, SSP 1 610 may identify a value of the factor. At this time, when the value of the factor indicates that transmission of the corresponding bundle between devices is prohibited, the first SSP 610 may stop the procedure of transmitting the corresponding bundle between devices and transmit the result to the first LBA 620. In another example, when the `bundle tranfer policy' includes information indicating conditions under which the transmission of the corresponding bundle between devices is allowed, the first SSP 610 may identify the conditions and then compare the conditions with information recorded in the `bundle tranfer history'. For example, when the `bundle tranfer policy' includes a maximum number of allowed transmissions of the corresponding bundle between devices, a period during which transmission of the corresponding bundle between devices is allowed, or a maximum number of allowed transmissions of the corresponding bundle within a specific period, the first SSP 610 may identify the `bundle tranfer history' and identify whether the bundle to be currently transmitted can be currently transmitted without violating the `bundle tranfer policy'. At this time, when it is determined that current transmission of the bundle violates the `bundle tranfer policy', the first SSP 610 may stop the procedure of transmitting the corresponding bundle between devices and transmit the result to the first LBA 620. When necessity of permission of the service provider and/or the bundle management server is configured in the `bundle tranfer configuration' before the bundle is transmitted, a procedure for approval may be performed. That is, the first terminal 600 may make a request for permitting transmission of the bundle between devices by accessing the 'server managed by the service provider and/or the bundle management server and/or the server managed by cooperation between the service provider and the bundle management server' (hereinafter, referred to as a 'server'). At this time, the first terminal 600 may provide information related to the bundle (for example, bundle identifier such as a bundle identifier (SPB ID), a bundle family identifier (SPB family ID), and a bundle family manager identifier (SPB family custodian object ID), or other information indicating attributes of the bundle (for example, metadata of the bundle or some of the metadata) to the 'server'. In such a process, a mutual authentication process between the first terminal and the server may be further included. If the server does not permit transmission of the corresponding bundle between devices, the bundle transmission procedure may be stopped.

In operation 6010, the first SSP 610 may selectively generate a `bundle tranfer code'. As described above, the procedure of generating the bundle tranfer code in operation 6010 may be a selectively (optionally) performed procedure. In this case, the procedure of generating the bundle tranfer code may be performed as necessary or may be omitted. For example, when the bundle tranfer code is not used for tranfer of the bundle or when the bundle tranfer code is used for tranfer of the bundle but a conventionally defined value (for example, the bundle identifier) is used as the bundle tranfer code, the procedure of generating the bundle tranfer code in operation 6010 may be omitted. Alternatively, when the bundle tranfer code is used for tranfer of the bundle and it is needed to define a new bundle tranfer code, the procedure of generating the bundle tranfer code in operation 6010 may be performed.

As described above, the `bundle tranfer code' may not be used, or when the bundle tranfer code is used, the bundle tranfer code may be newly generated or one of the conventionally defined values may be selected and used. A more detailed description of the `bundle tranfer code' is provided below.

According to various embodiments, the `bundle tranfer code' is a code used to refer to the corresponding bundle in the process of transmitting the corresponding bundle between devices and should be a value which can identify the corresponding bundle. The `bundle tranfer code' may be an already defined value which can identify the bundle (for example, the bundle identifier (SPB ID) or a predefined value which can identify the bundle identifier), a new value generated by the first SSP 610 after a request for transmitting the bundle is received, or a value obtained by combining the predefined value and the newly generated value. Further, the `bundle tranfer code' may one value or a set of values including one or more values. When the `bundle tranfer code' is a combination of one or more values, the values may include at least one of an identifier of a predefined bundle, a predefined value which can identify the identifier of the bundle, or values newly generated by the first SSP 610 after a request is received. As described above, in the disclosure, the bundle tranfer code used for transmitting the bundle between devices may be configured as a value other than a unique identifier of the corresponding bundle to be transmitted (bundle identifier (SPB ID)). Accordingly, a procedure of transmitting the bundle between devices may be performed without exposure of the unique identifier of the bundle to the outside.

When the `bundle tranfer code' is used for bundle transmission, the first SSP 610 may bind the `bundle tranfer code' and information on the bundle to be transmitted in operation 6010.

Referring to FIG. 6, in operation 6015, the response result of operation 6005 may be transmitted from the first SSP 610 to the first LBA 620. For example, as illustrated in FIG. 6, a response to a select SPB command may be transferred from the first SPB 610 to the first LBA 620 through a select SPB response. The response may include the `bundle tranfer code' described in operation 6010. Further, the information transferred from the first SSP 610 to the first LBA 620 may further selectively include a bundle identifier such as a bundle identifier (SPB ID), a bundle family identifier (SPB family ID), or a bundle family manager identifier (SPB family custodian object ID), or other information indicating attributes of the bundle (for example, metadata of the bundle or some of the metadata). In addition, the information transferred from the first SSP 610 to the first LBA 620 may further selectively include an address of the bundle management server (SPBM Addr) associated with the bundle to be transmitted.

Operations 6005 to 6015 may be omitted.

Referring to FIG. 6, in operation 6020, the information required for transmitting the bundle between devices may be transferred from the first LBA 620 of the first terminal 600 to the second LBA 670 of the second terminal 650. At this time, the information transferred from the first LBA 620 to the second LBA 670 may include `bundle transmission information'. Alternatively, the information transferred from the first LBA 620 to the second LBA 670 may include a `bundle tranfer code'. Further, the information transferred from the first LBA 620 to the second LBA 670 may further selectively include a bundle identifier such as a bundle identifier (SPB ID), a bundle family identifier (SPB family ID), or a bundle family manager identifier (SPB family custodian object ID), or other information indicating attributes of the bundle (for example, metadata of the bundle or some of the metadata). The information transferred from the first LBA 620 to the second LBA 670 may further selectively include information required for the connection to be established between the first LBA 620 and the second LBA 670 in operation 6025. The information transferred from the first LBA 620 to the second LBA 670 may further selectively include a shared secrete value to be shared between the first LBA 620 and the second LBA 670. The information transferred from the first LBA 620 to the second LBA 670 may further selectively include an address of a bundle management server (SPBM Addr) associated with the bundle to be transmitted. The information transferred from the first LBA 620 to the second LBA 670 may further selectively include information indicating that tranfer of the bundle between devices is performed.

Through operation 6020, the information transferred from the first LBA 620 to the second LBA 670 may be transmitted in various methods. For example, the information transferred from the first LBA 620 to the second LBA 670 may be provided to the user through the UI of the first terminal 600, and the user may input the provided information to the second LBA through the UI of the second terminal 650. Alternatively, the first LBA may configure the information which should be transferred to the second LBA in the form of an image (for example, a QR code) and display the same on the screen of the first terminal, and the user may scan the image through the second terminal 650 and transmit information to the second LBA 670. However, a method by which the information is transferred from the first LBA 620 to the second LBA 670 is not limited to the above methods.

Referring to FIG. 6, in operation 6025, the connection may be established (or configured) between the first LBA 620 and the second LBA 670. If information required for the connection is transmitted in operation 6020, the first LBA 620 and the second LBA 670 may establish the connection using the information. The connection between the first LBA 620 and the second LBA 670 may be a direct device-to-device connection (for example, a wireless connection such as NFC, Bluetooth, UWB, Wi-Fi-Direct, LTE device-to-device (D2D), and 5G D2D, or a wired connection through a cable) or a long-distance connection having a remote server (for example, a relay server) located between the first LBA 620 and the second LBA 670.

Referring to FIG. 6, although it is illustrated that operation 6025 is the last operation, the operation is an operation independent from other operations, that is, operations 6000, 6005, 6010, 6015, and 6020, and may be performed regardless of the order of the operations. For example, operation 6025 may be performed between operation 6015 and operation 6020, in which case the information transmitted from the first LBA 620 to the second LBA 670 in operation 6020 may also be transmitted through the connection established in operation 6025.

FIG. 7 illustrates a detailed procedure of the procedure in which the bundle is transmitted among the procedures illustrated in FIG. 5. More specifically, FIG. 7 illustrates an example of a procedure in which one terminal transmits a bundle to another terminal according to an embodiment of the disclosure. In the disclosure, the procedure of FIG. 7 may be referred to as a bundle transmission procedure.

According to various embodiments, the terminal may include at least one LBA and at least one SSP. For example, as illustrated in the example of FIG. 7, a first terminal 700 may include a first LBA 710 and a first SSP 720, and a second terminal 750 may include a second LBA 760 and a second SSP 770. For example, the first terminal 700 may be a terminal in which the first SSP 710 is installed and the first LBA 720 for controlling the first SSP 710 is installed, and the second terminal 750 may be a terminal in which the second SSP 760 is installed and the second LBA 770 for controlling the second SSP 760 is installed.

Referring to FIG. 7, in operation 7000, the second LBA 770 may make a request for "SSP information (SspInfo)" to the second SSP 760. When the second LBA 770 makes a request for "SSP information (SspInfo)" to the second SSP 760 in operation 7000, the second LBA 770 may inform the second SSP 760 that the bundle will transfer between devices. Further, the second LBA 770 may selectively provide information on a bundle to be transmitted to the second SSP 760. The information may selectively include at least one of a bundle identifier (SPB ID), a bundle family identifier (SPB family ID), and a bundle family manager identifier (SPB family custodian object ID).

Operation 7000 may be automatically performed right after the process illustrated in FIG. 6 or may be performed after an external input is received. At this time, the `external input' may be performed through a process in which the user directly selects the bundle to be received through the UI provided by the second terminal 750 or may be input into the second LBA 720 through a push input from the remote server, or the second LBA 720 may access the remote server to read corresponding information.

Referring to FIG 7, in operation 7005, the second SSP 760 may generate its own "SSP information". The "SSP information" may include information on the second SSP which should be provided for bundle transmission. For example, the "SSP information" may include information for a certificate negotiation process (certificate negotiation information) which should be passed before the second SSP 760 receives the bundle. The "certificate negotiation information" may include certificate information (SenderSpblVerification) which the second SSP 760 can use for verifying another SSP and certificate information (ReceiverSpblVerification) which another rSSP can use for verifying the second SSP. Further, the "certificate negotiation information" may further selectively include an algorithm list of sums of keys supported by the second SSP 760 and may further selectively include a list of encryption algorithms supported by the second SSP 760. When the bundle family identifier (SPB family ID) and the bundle family manager identifier (SPB family custodian object ID) are provided in operation 7000, the "certificate negotiation information" may be selected dependently on the bundle family identifier or the bundle family manager identifier in which case the "SSP information" may further selectively include on the bundle family identifier and the bundle family manager identifier together with the certificate negotiation information. The "SSP information" may further selectively include SSP version information including at least one of version information of the standard supported by the primary platform and the loader included in the second SSP 760.

Referring to FIG. 7, in operation 7010, the second SSP 760 may transfer the "SSP information" generated in operation 7005 to the first SSP 710 via the second LBA 770 and the first LBA 720.

According to operations 7000 to 7010, after the second LBA 770 makes a request for "SSP information (SspInfo)" to the second SSP 760 and the second SSP 760 generates its own "SSP information", the second SSP 760 may transfer the "SSP information" to the first SSP 710 via the second LBA 770 and the first LBA 720. However, according to an embodiment, a process of transmitting the "SSP information" from the second terminal 750 to the first terminal 700 is described below. For example, after the second LBA 770 generates "SSP information" by itself, the second LBA 770 may transfer the "SSP information" to the first SSP 710 via the first LBA 720. The operation may be automatically performed right after the process illustrated in FIG. 6 or may be performed after an external input is received. At this time, the `external input' may be performed through a process in which the user directly selects the bundle to be received through the UI provided by the second terminal 750 or may be input into the second LBA 720 through a push input from the remote server, or the second LBA 720 may access the remote server to read corresponding information. Refer to the description in operation 7005 above for the "SSP information".

Referring to FIG. 7, in operation 7015, the first SSP 710 may identify the received "SSP information".

When the necessity of permission of the service provider and/or the bundle management server is configured in the `bundle tranfer policy' before the bundle is transmitted, a procedure for receiving approval may be performed. That is, the first terminal 700 may make a request for permitting transmission of the bundle between devices by accessing the 'server managed by the service provider and/or the bundle management server and/or the server managed by cooperation between the service provider and the bundle management server' (hereinafter, referred to as a 'server'). At this time, the first terminal 700 may provide information related to the bundle (for example, bundle identifiers such as a bundle identifier (SPB ID), a bundle family identifier (SPB family ID), and a bundle family manager identifier (SPB family custodian object ID), other information indicating attributes of the bundle (for example, metadata of the bundle or some of the metadata), or some and/or all of the SSP information of the second terminal received in the previous operation to the 'server'. In such a process, a mutual authentication process between the first terminal and the server may be further included. However, the mutual authentication process between the first terminal and the server does not have to be performed in this operation, and may have been performed before operation 7015. If the server does not permit transmission of the corresponding bundle between devices, the bundle transmission procedure may be stopped.

In operation 7015, the first SSP 710 may generate "first terminal authentication information (Device1.Auth)" for authenticating the first SSP itself.

A more detailed procedure of the process is described below. The first SSP 710 may identify certificate information for verifying the first SSP itself through the received "SenderSpblVerification" and "algorithm list of sums of keys supported by the second SSP 760" and select at least one key agreement certificate (ssp1.Cert.KA). Alternatively, the first SSP 710 may generate a pair of asymmetric encryption keys such as a public key "ssp1.ePK.KA" and a secret key "ssp1.eSK.KA" to be used for key agreement through "the algorithm list of sums of keys supported by the second SSP 760" and then select the public key "ssp1.ePK.KA" from the pair of keys. Further, the first SSP 710 may identify certificate information for verifying the first SSP itself through the received "SenderSpblVerification" and further select at least one signature certificates (ssp1.Cert.DS). The first SSP 710 may select at least one certificate of the second SSP 760 which the first SSP can verify through the received "ReceiverSpblVerification" and then configure information corresponding thereto as "CiPkIdToBeUsed". The first SSP 710 may select at least one encryption algorithm to be used in the future through "the list of encryption algorithms supported by the second SSP 760" and then configure information corresponding thereto as "CryptoToBeUsed". The first SSP 710 may identify a list of "the version information of the standard supported by the primary platform and the loader included in the second SSP 760" and identify whether the list includes a version of the standard supported by the first SSP itself.

"The first terminal authentication information (Device1.Auth)" may include at least one of "sspl.Cert.KA", "ssp1.ePK.KA" "CiPkIdToBeUsed", and "CryptoToBeUsed". "The first terminal authentication information (Device1.Auth)" may further selectively include "ssp1.Cert.DS". "The first terminal authentication information (Device1.Auth)" may further selectively include at least one of a bundle identifier (SPB ID) of the bundle to be transmitted in the future, a bundle family identifier (SPB family ID), and a bundle family manager identifier (SPB family custodian object ID).

At this time, some or all of "the first terminal authentication information (Device1.Auth)" may have digital signature to be verified using ssp1.Cert.DS in order to guarantee integrity of the information, and the digital signature data may be added as a portion of the "the first terminal authentication information".

Referring to FIG. 7, in operation 7020, the first SSP 710 may transfer the "the first terminal authentication information (Device1.Auth)" generated in operation 7015 to the second LBA 770 via the first LBA 720.

Referring to FIG. 7, in operation 7025, the second LBA 770 may transfer "the first terminal authentication information (Device1.Auth)" to the second SSP 760. Further, the second LBA 770 may further transfer the "bundle tranfer code" to the second SSP 760. Particularly, the second LBA 770 may transfer the "bundle identifier" (for example, bundle identifier (SPB ID)) to the second SSP 760. According to an embodiment, the second LBA 770 may transfer the "bundle tranfer code" to the second SSP 760 in an operation other than operation 7025. For example, the second LBA 770 may transfer the "bundle tranfer code" to the second SSP 760 in operation 7000.

Referring to FIG. 7, in operation 7030, the second SSP 760 may verify "the received first terminal authentication information (Device1.Auth)". When the second SSP 760 receives "ssp1.Cert.KA", the second SSP may identify signature of the corresponding certificate to check validity of the certificate. When the second SSP 760 receives "ssp1.ePK.KA" and digital signature therefor, the second SSP may first check validity of ssp1.Cert.DS and then identify digital signature using the certificate and identify integrity of the received public key ssp1.ePKKA. The second SSP 760 may identify the received "CiPkIdToBeUsed" and select at least one signature certificate (ssp2.Cert.DS) for verifying the second SSP itself.

Although not illustrated in the drawings, the second SSP 760 may generate a pair of asymmetric encryption keys such as a public key "ssp2.ePK.KA" and a secret key "ssp2.eSK.KA" to be used for key agreement and then select the public key "ssp2.ePK.KA" from the pair of keys in operation 7030. The second SSP 760 may select one of the public key for key agreement included in ssp1.Cert.KA and ssp1.ePK.KA and then generate a session key ShKey01 to be used for encryption during future communication with terminal 1 using the value and ssp2.eSK.KA. ShKey01 should be a session key for encryption algorithm included in the received "CryptoToBeUsed".

In operation 7030, the second SSP 760 may generate "second terminal authentication information (Device2.Auth)" for authenticating the second SSP itself. The "second terminal authentication information (Device2.Auth)" may include "ssp2.Cert.DS". The "second terminal authentication information (Device2.Auth)" may further include "ssp2.ePK.KA". The "second terminal authentication information (Device2.Auth)" may further include a transaction ID referring to the current session generated by SSP 2 760. The "second terminal authentication information (Device2.Auth)" may further include the "bundle tranfer code". The "second terminal authentication information (Device2.Auth)" may further include an identifier of the primary platform installed in the second SSP 760. The "second terminal authentication information (Device2.Auth)" may further include a part number ID of the second SSP 760. The "part number ID" may be information for inferring "a manufacturer of the primary platform installed in the second SSP 760 and model information of the primary platform" through the ID. "The second terminal authentication information (Device2.Auth)" may further selectively include at least one of a bundle identifier (SPB ID) associated with the bundle to be transmitted in the future, a bundle family identifier (SPB family ID), and a bundle family manager identifier (SPB family custodian object ID). The "second terminal authentication information (Device2.Auth)" may further include ssp2.info. Ssp2.info may be information referring to a second terminal. ssp2.info may be an SSP identifier of the second SSP 660. Ssp2.info may be a series of information bound with the SSP identifier of the second SSP 660. Ssp2.info may be a series of character strings and/or codes bound with the SSP identifier of the second SSP 660.

At this time, some or all of "the second terminal authentication information (Device2.Auth)" may have digital signature to be verified using ssp2.Cert.DS in order to guarantee integrity of the information, and the digital signature data may be added as a portion of the "the second terminal authentication information". Further, some or all of "the second terminal authentication information (Device2.Auth)" may be encrypted using the previously generated session key ShKey01.

Referring to FIG. 7, in operation 7035, the second SSP 760 may transfer the "second terminal authentication information (Device2.Auth)" generated in operation 7030 to the first SSP 710 via the second LBA 770 and the first LBA 720. At this time, the "bundle tranfer code" may be further transmitted selectively. The first LBA 720 may additionally transmit ssp2.Info received in operation 6000 to the first SSP 710.

Referring to FIG. 7, in operation 7040, the first SSP 710 may verify the received "second terminal authentication information (Device2.Auth)". The first SSP 710 may verify signature of the received "ssp2.Cert.DS" and verify validity of the corresponding certificate. The first SSP 710 may check whether the received bundle identifier (SPB ID), bundle family identifier (SPB family ID), or bundle family manager identifier (SPB family custodian object ID) is a correctly configured value associated with the bundle which the first SSP desires to transmit. Particularly, a bundle tranfer configuration associated with the received bundle identifier may be identified and whether the corresponding bundle is a bundle which can be transmitted to the second terminal may be identified. The first SSP 710 may store the received transaction ID or the identifier of the primary platform installed in the second SSP 760. The first SSP 710 may check whether the second SSP 760 is an SSP capable of installing the corresponding bundle (check eligibility) on the basis of the received primary platform ID and/or part number ID. The first SSP 710 may bind the received transaction ID or the ID of the primary platform installed in the second SSP 760 with the session currently being executed or the bundle to be transmitted. The first SSP 710 may verify whether ssp2.Info received from the first LBA 720 is the same as ssp2.Info included in the "second terminal authentication information (Device2.Auth)" in operation 7035.

When encrypted data is included in the "second terminal authentication information (Device2.Auth)" in the process, the first SSP 710 may generate a session key ShKey01 by using the received ssp2.ePK.KA and the secret key or ssp1.eSK.KA corresponding to the public key for key agreement included in its own ssp1.Cert.KA, decrypt the encrypted data by using the session key, and then perform a verification process. Further, when the "second terminal authentication information (Device2.Auth)" includes a digital signature, the first SSP 710 may verify validity of the received digital signature by using "ssp2.Cert.DS" in the process.

When the necessity of permission of the service provider and/or the bundle management server is configured in the `bundle tranfer policy' before the bundle is transmitted, a procedure for receiving approval may be performed. That is, the first terminal 700 may make a request for permitting transmission of the bundle between devices by accessing the 'server managed by the service provider and/or the bundle management server and/or the server managed by cooperation between the service provider and the bundle management server (hereinafter, referred to as a 'server'). At this time, the first terminal 700 may provide information related to the bundle (for example, bundle identifiers such as a bundle identifier (SPB ID), a bundle family identifier (SPB family ID), and a bundle family manager identifier (SPB family custodian object ID), other information indicating attributes of the bundle (for example, metadata of the bundle or some of the metadata), some and/or all of the SSP information received from the second terminal, or some and/or all of the "second terminal authentication information" received from the second terminal (for example, the primary platform ID and/or the part number ID of the second SSP) to the 'server'. In such a process, a mutual authentication process between the first terminal and the server may be further included. However, the mutual authentication process between the first terminal and the server does not have to be performed in this operation, and may have been performed before operation 7040. If the server does not permit transmission of the corresponding bundle between devices, the bundle transmission procedure may be stopped.

Although not illustrated in FIG. 7, the first SSP 710 may generate a pair of asymmetric encryption keys such as a public key "ssp1.bundle.ePK.KA" and a secret key "ssp1.bundle.eSK.KA" to be used for key agreement in operation 7040. At this time, the pair of keys "ssp1.bundle.ePK.KA and ssp1.bundle.eSK.KA" may be configured to have the same values as the previously generated "ssp1.ePK.KA and ssp1.eSK.KA" Alternatively, the pair of keys "ssp1.bundle.ePK.KA and ssp1.bundle.eSK.KA" may be configured to have the same values as the previously used "public key included in ssp1.Cert.KA and the secret key corresponding thereto". Further, the first SSP 710 may generate a session key ShKey02 by using ssp1.bundle.eSK.KA and ssp2.ePK.KA. When ssp1.eSK.KA or the 'secret key corresponding to the public key included in ssp1.Cert.Ka is reused for ssp1.bundle.eSK.KA, the session key ShKey02 may also be configured to have the same value as the previously generated ShKey01.

In operation 7040, the first SSP 710 may configure a bundle to be transmitted to the second terminal 720 and/or metadata associated with the bundle. At this time, the first SSP 710 may identify a bundle which the first SSP itself desires to transmit by using the received "bundle tranfer code". The bundle to be configured may include "ssp1.Cert.DS". The bundle to be configured may further include "ssp1.bundle.ePK.KA". The bundle to be configured may further include a "transaction ID" for identifying the corresponding session. The bundle to be configured may further selectively include the "bundle tranfer code". The bundle to be configured may further selectively include at least one of a bundle identifier (SPB ID) associated with the bundle to be transmitted, a bundle family identifier (SPB family ID), and a bundle family manager identifier (SPB family custodian object ID). The bundle to be configured may further selectively include metadata of the corresponding bundle. The bundle to be configured may further selectively include an address of the bundle management server (SPBM Addr).

According to various embodiments, the bundle (or metadata associated with the bundle) configured in operation 7040 may include the "bundle tranfer configuration". At this time, the first SSP 710 may update a "bundle tranfer history" in the bundle tranfer configuration to be included in the bundle in consideration of the current transmission and then insert the updated content into the bundle. Examples of the available update of "bundle tranfer history" are described below. For example, the first SSP 710 may add information on a date and a time of the current bundle tranfer to the bundle tranfer history. The first SSP 710 may increase information on the number of bundle tranfers in the bundle tranfer history by 1. The first SSP 710 may add information on at least one of the first terminal 700, the first SSP 710, and the first LBA 720 as information on the terminal transmitting the bundle to the bundle tranfer history or add information on at least one of the second terminal 750, the second SSP 760, and the second LBA 770 as information on the terminal receiving the bundle. The first SSP 710 may add its own digital signature in order to guarantee integrity of the update history.

According to various embodiments, digital signature data generated using ssp1.Cert.DS may be added to the bundle to be configured in operation 7040. That is, digital signature data generated for some or all of the elements of the bundle may be added as a portion of the bundle. Some or all of the bundles to be configured may be encrypted using ShKey02.

Referring to FIG. 7, in operation 7045, the first SSP 710 may transfer the bundle generated (configured) in operation 7040 to the second LBA 770 via the first LBA 720. At this time, metadata associated with the transmitted bundle may be further transmitted selectively. The "bundle tranfer code" associated with the transmitted bundle may be further transmitted selectively. The "bundle tranfer configuration" associated with the transmitted bundle may be further transmitted. For example, the "bundle tranfer configuration" may be transmitted in a separate format (for example, message) without being inserted into the bundle or the metadata. At this time, the first SSP 710 may perform transmission without any update of the bundle tranfer configuration which the first SSP has. Alternatively, the first SSP 710 may update the bundle tranfer configuration before transmitting the bundle tranfer configuration. For example, SSP 1 710 may add information on a date and time of the current bundle tranfer to the bundle tranfer history. The first SSP 710 may increase information on the number of bundle tranfers in the bundle tranfer history by 1. The first SSP 710 may add information on at least one of the first terminal 700, the first SSP 710, and the first LBA 720 as information on the terminal transmitting the bundle to the bundle tranfer history or add information on at least one of the second terminal 750, the second SSP 760, and the second LBA 770 as information on the terminal receiving the bundle. Lastly, the first SSP 710 may add its own digital signature in order to guarantee integrity of the content which the first SSP transmits regardless of the update of the bundle tranfer configuration. Meanwhile, according to an embodiment, as described in operation 7040, the bundle tranfer configuration may be included in the configured bundle in which case transmission of the bundle tranfer configuration in operation 7045 may be omitted.

The second SSP 710 may delete the transmitted bundle. Alternatively, the transmitted bundle may be configured as an unavailable state.

FIG. 8 illustrates a detailed procedure of a process of finishing the transmission process after the bundle is transmitted among the procedures illustrated in FIG. 5. More specifically, FIG. 8 illustrates an example of a procedure in which the terminal installs the received bundle and updates the relevant configuration according to an embodiment of the disclosure. In the disclosure, the procedure of FIG. 8 may be referred to as a bundle installation procedure.

According to various embodiments, the terminal may include at least one LBA and at least one SSP. For example, as illustrated in the example of FIG. 8, a first terminal 800 may include a first LBA 810 and a first SSP 820, and a second terminal 850 may include a second LBA 860 and a second SSP 870. For example, the first terminal 800 may be a terminal in which the first SSP 810 is installed and the first LBA 820 for controlling the first SSP 810 is installed, and the second terminal 850 may be a terminal in which the second SSP 860 is installed and the second LBA 870 for controlling the second SSP 860 is installed.

Referring to FIG. 8, in operation 8000, the second LBA 870 and the second SSP 860 may cooperate with each other to install the bundle in the second terminal 850. When metadata is transmitted, the second LBA 870 or the second SSP 860 may verify the content included in the metadata. When the "bundle tranfer code" is transmitted, the second LBA 870 or the second SSP 860 may verify whether the received bundle tranfer code is the same as the bundle tranfer code (for example, in operation 7025 of FIG. 7) used in the same session in the past. When the "bundle tranfer configuration" is transmitted, the second LBA 870 may transfer the information to the second SSP 860. When the transaction ID is transmitted, the second LBA 870 or the second SSP 860 may check whether the transaction ID is the same as the transaction ID used in the current session. When at least one of the bundle identifier (SPB ID), the bundle family identifier (SPB family ID), and the bundle family manager identifier (SPB family custodian object ID) is transmitted, the second LBA 870 or the second SSP 860 may identify whether the information is the same as information on the bundle to be received at present. When ssp1.Cert.DS is transmitted, the second SSP 860 may authenticate the first SSP 810 by verifying validity of the certificate. When encrypted data is included in the received data, the second SSP 860 may generate a session key ShKey02 by using the received ssp1.bundle.ePK.KA and its own ssp2.eSK.KA, decrypt the encrypted data by using the session key, and then perform verification. When digital signature is included in the received data, the second SSP 860 may verify ssp1.Cer.DS and then verify validity of the digital signature by using the certificate.

In operation 8000, when necessity of additional know your customer (KYC) authentication of the user is configured in the "bundle tranfer configuration" in order to configure the received bundle as the available state, some or all of the following process may be performed. The second terminal 850 may notify the service provider and/or the bundle management server of installation of the current bundle in the second SSP 860. The notification may include an identifier of the installed bundle and an identifier of the second SSP 860. The second terminal 850 may notify the user of the need of additional KYC authentication to activate the bundle. The user may contact the service provider and/or the bundle management server to perform KYC authentication. The service provider and/or the bundle management server may activate the bundle installed in the second terminal 850 through a remote management command.

Referring to FIG. 8, in operation 8005, the second SSP 860 may selectively update the received bundle tranfer configuration. As described above, the procedure of updating the bundle tranfer configuration in operation 8005 of FIG. 8 may be a selectively (optionally) performed procedure. In this case, the procedure of updating the bundle tranfer configuration may be performed as necessary or may be omitted. For example, when the update of the bundle tranfer configuration is not needed or when the update of the bundle tranfer configuration is needed but the bundle tranfer configuration has been already updated by the first terminal and the updated configuration is transmitted to the second terminal and thus the update by the second terminal is not needed, the procedure of updating the bundle tranfer configuration in operation 8005 of FIG. 8 may be omitted. Alternatively, when the update of the bundle tranfer configuration is needed and is required to be performed by the second terminal, the procedure of updating the bundle tranfer configuration in operation 8005 of Fig. 8 may be performed.

According to various embodiments, the second SSP may add information on a date and time of bundle tranfer performed just now to the bundle tranfer history. The second SSP 860 may increase information on the number of bundle tranfers in the bundle tranfer history by 1. The second SSP 860 may add information on at least one of the first terminal 800, the first SSP 810, and the first LBA 820 as information on the terminal transmitting the bundle to the bundle tranfer history or add information on at least one of the second terminal 850, the second SSP 860, and the second LBA 870 as information on the terminal receiving the bundle. Accordingly, the second SSP 860 may identify whether the corresponding bundle can transfer on the basis of the updated bundle tranfer configuration (bundle tranfer history) in the future and determine whether to perform a procedure of a request for bundle tranfer.

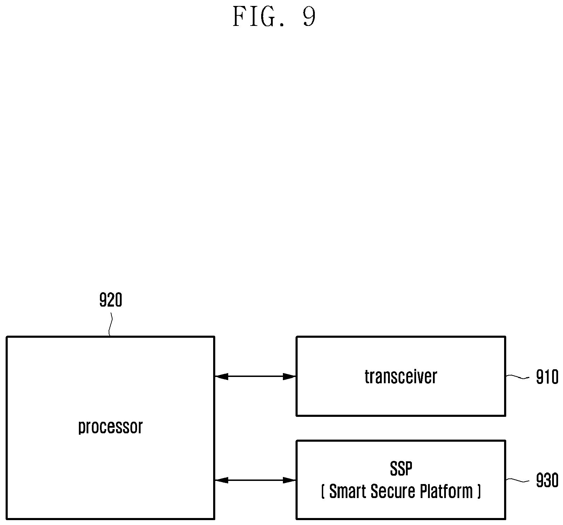

FIG. 9 illustrates a configuration of the terminal according to an embodiment of the disclosure.

As illustrated in FIG. 9, the terminal may include a transceiver 910 and at least one processor 920. The terminal may further include an SSP 930. For example, the SSP 930 may be inserted into the terminal and embedded into the terminal. At least one processor 920 may be named a controller. However, the configuration of the terminal is not limited to FIG. 9, and may include more or fewer elements than those illustrated in FIG. 9. According to some embodiments, the transceiver 910, at least one processor 920, and a memory (not shown) may be implemented in the form of a single chip. When the SSP 930 is embedded, a single chip including the SSP 930 may be implemented.

According to various embodiments, the transceiver 910 may transmit and receive signals, information, and data according to various embodiments of the disclosure to and from a transceiver of another terminal or an external server. The transceiver 910 may include an RF transmitter for up-converting and amplifying a frequency of a transmitted signal and an RF receiver for low noise-amplifying a received signal and down-converting a frequency. However, this is only an embodiment of the transceiver 910, and elements of the transceiver 910 are not limited to the RF transmitter and the RF receiver. Further, the transceiver 910 may receive a signal through a radio channel, output the signal to at least one processor 920, and transmit the signal output from at least one processor 920 through the radio channel.

According to various embodiments, the transceiver 910 may transmit or receive information on an SSP included in another terminal, authentication information for authenticating another terminal, a bundle tranfer code, a bundle tranfer configuration, and a bundle from a transceiver of another terminal or an external server.

Meanwhile, at least one processor 920 is an element for overall controlling the terminal. At least one processor 920 may control the overall operation of the terminal according to various embodiments of the disclosure described above.

Meanwhile, the SSP 930 may include a processor or a controller for installing and controlling a bundle or may have an application installed therein.

According to various embodiments, at least one processor or controller within the SSP 930 may determine whether to transmit a specific bundle by identifying a bundle tranfer configuration. Further, the processor or controller may update the bundle tranfer configuration as necessary.

According to various embodiments, at least one processor or controller within the SSP may generate a bundle tranfer code to control a transmission process of a specific bundle. The bundle tranfer code may be mapped to the specific bundle and used for the control process.

According to various embodiments, at least one processor or controller within the SSP may generate its own SSP information and identify and verify SSP information of another SSP received from the outside.

According to various embodiments, at least one processor or controller within the SSP may generate authentication information for verifying itself and verify authentication information of another SSP received from the outside.

According to various embodiments, the SSP 930 may generate a bundle and may install the bundle alone or through cooperation with one or more processors 920. Further, the SSP 930 may manage the bundle.

According to various embodiments, the SSP 930 may operate according to the control of the processor 920. Alternatively, the SSP 930 may include a processor or a controller for installing and controlling a bundle or may have applications installed therein. Some or all of the applications may be installed in the SSP 930 or a memory (not shown).

Meanwhile, the terminal may further include the memory (not shown), and may store a basic program, an application, and data such as configuration information for the operation of the terminal. Further, the memory may include at least one type of storage medium among a flash memory type, a hard-disk type, a multimedia card micro type, a card-type memory (for example, an SD memory, an XD memory or the like), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). In addition, the processor 920 may perform various operations using various types of programs, content, and data stored in the memory.

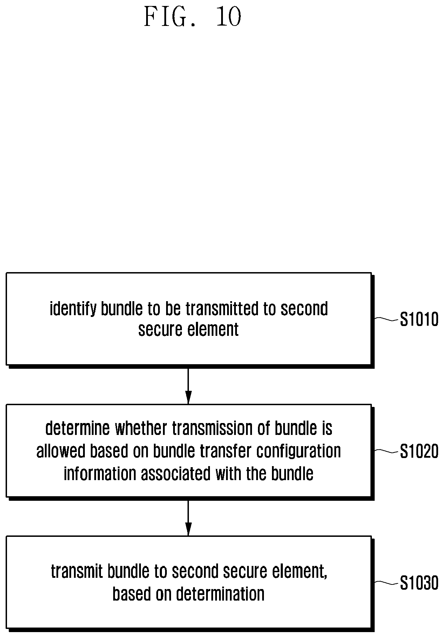

FIG. 10 is a flowchart illustrating a method of transmitting a bundle by a first secure element according to an embodiment of the disclosure. In FIG. 10, a description that overlaps the description made with reference to FIGs. 1 to 9 is omitted.

Referring to FIG. 10, a first secure element may identify a bundle to be transmitted to a second secure element in S1010. This is the same as the description made with reference to operation 6010 of FIG. 6.

The first secure element may determine whether transmission of the bundle is allowed on the basis of bundle tranfer configuration information associated with the bundle in S 1020. This is the same as the description made with reference to operation 6010 of FIG. 6.

The first secure element may transmit the bundle to the second secure element on the basis of the determination in S1030. This is the same as the description made with reference to FIGs. 5 to 7.

According to various embodiments, the first secure element may identify whether to generate a bundle tranfer code to be used for transmitting the bundle and generate the bundle tranfer code on the basis of the identification.

According to various embodiments, an operation of transmitting the bundle tranfer code to the second secure element may be further included.

According to various embodiments, generating the bundle tranfer code may include, when the generation of the bundle tranfer code is identified, generating the bundle tranfer code. At this time, the bundle tranfer code may be a preconfigured unique ID of the bundle or a new ID for identifying the bundle.

According to various embodiments, the bundle tranfer configuration information may include at least one of bundle tranfer policy information or bundle tranfer history information.

According to various embodiments, the bundle tranfer policy information may include an indication indicating whether transmission of the bundle between devices is allowed.

According to various embodiments, the bundle tranfer history information may include at least one of information on a date and time of the bundle tranfer or information on a number of bundle tranfers.

According to various embodiments, an operation of updating the bundle tranfer configuration information may be further included.

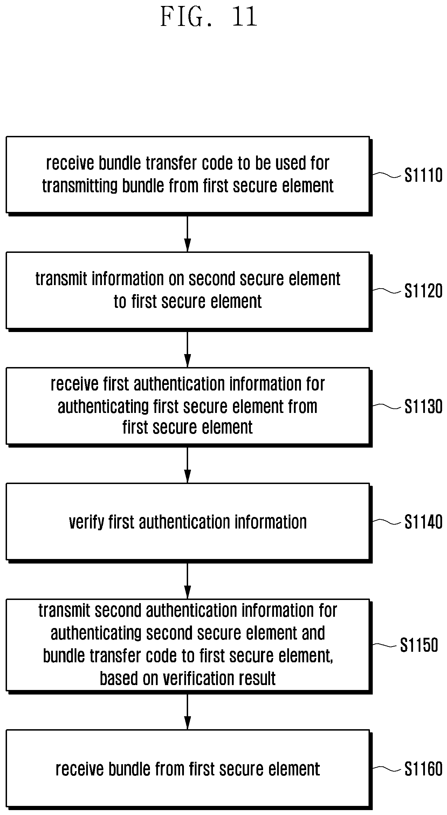

FIG. 11 is a flowchart illustrating a method of receiving a bundle by a second secure element according to an embodiment of the disclosure. In FIG. 11, a description that overlaps the description made with reference to FIGs. 1 to 10 is omitted.

Referring to FIG. 11, the second secure element may receive a bundle tranfer code to be used for transmitting a bundle from the first secure element in S 1110. This is the same as the description made with reference to operation 7010 of FIG. 7.

The second secure element may transmit information on the second secure element to the first secure element in S1120. This is the same as the description made with reference to operation 7020 of FIG. 7.

The second secure element may receive first authentication information for authenticating the first secure element from the first secure element in S1 130. This is the same as the description made with reference to operation 7020 of FIG. 7.

The second secure element may verify the first authentication information in S1140. This is the same as the description made with reference to operation 7030 of FIG. 7.

The second secure element may transmit second authentication information for authenticating the second secure element and the bundle tranfer code to the first secure element on the basis of the verification result in S1 150. This is the same as the description made with reference to operation 7035 of FIG. 7.

The second secure element may include an operation of receiving the bundle from the first secure element in S 1160. This is the same as the description made with reference to operation 7045 of FIG. 7.

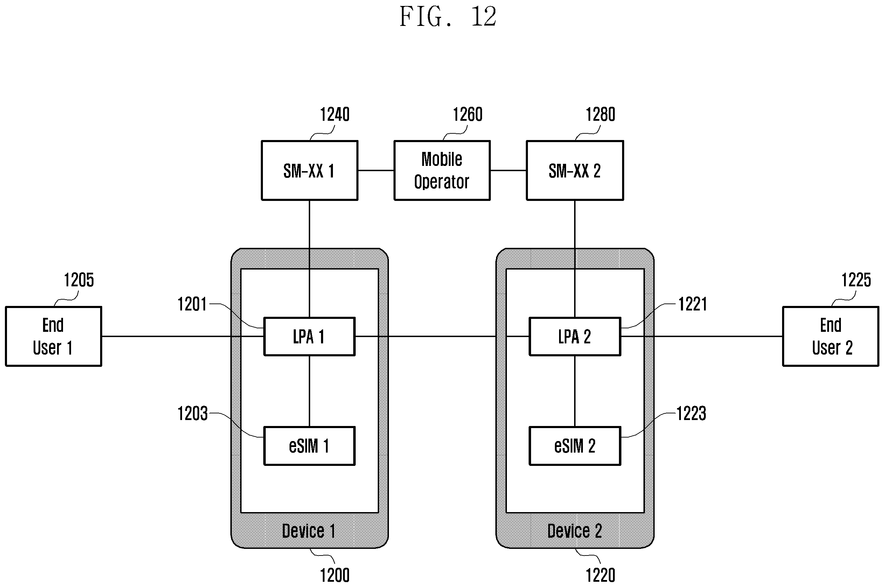

FIG. 12 illustrates an example of a method by which two terminals interact with each other in order to transmit a profile to each other according to an embodiment of the disclosure.

As illustrated in FIG. 12, eSIMs 1203 and 1223 may be installed in terminals 1200 and 1220, and profiles (not shown) may be installed in the eSIMs 1203 and 1223. Further, LPAs 1201 and 1221 may be installed in the terminals 1200 and 1220. The eSIMs 1203 and 1223 may be controlled by the LPAs 1201 and 1221. Users 1205 and 1225 may control profiles installed in the eSIMs 1203 and 1223 of the respective terminals through the LPAs 1201 and 1221. At this time, the first user 1205 and the second user 1225 may be the same as each other. Further, the first LPA 1201 and the second LPA 1221 may be connected to each other to communicate. At this time, the description of drawings described below is referred to for a method of the connection between the LTAs.

A mobile operator 1260 may be connected to a first RSP server 1240 and a second RSP server 1280, the LPA 1201 of the first terminal 1200 may be connected to the first RSP server 1240, and the LPA 1221 of the second terminal 1220 may be connected to the second RSP server 1280. At this time, the first RSP server 1240 and the second RSP server 1280 may be the same as each other or different from each other. When one or more operator servers are included in the configuration, each operator server may be connected to each separate RSP server, or at least one operator server may be connected to the same RSP server. Although FIG. 12 illustrates that each of the RSP servers 1240 and 1280 are configured as a single server for convenience, one or more profile provision servers (SM-DP+) may be included in the server configuration or one or more subscription relay servers (SM-DSs) for generating the connection between a specific profile provision server and the terminal may be included in server configuration according to implementation and embodiments. As described above, various server configurations can be briefly expressed as a single RSP server in the following drawings.

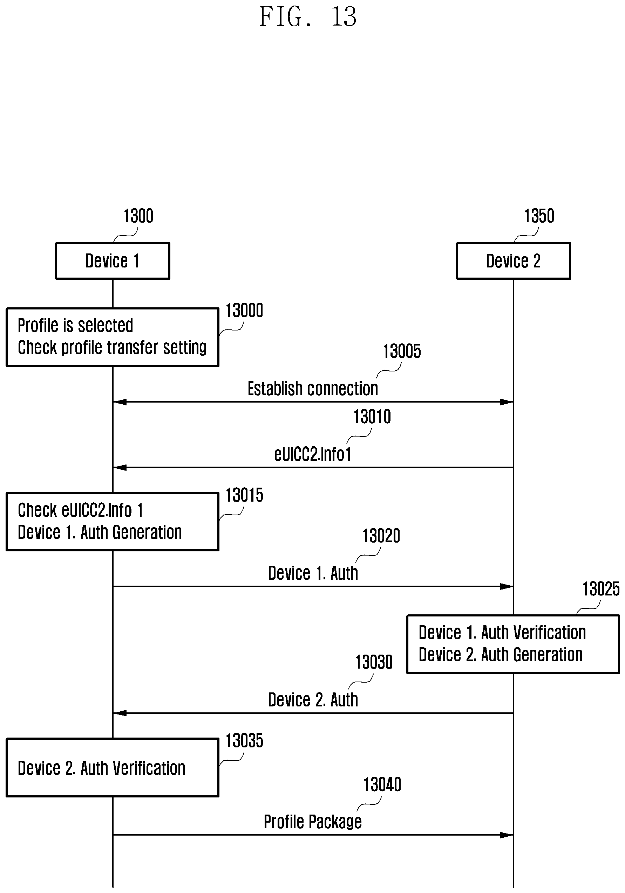

FIG. 13 illustrates a procedure in which one terminal transmits a profile to another terminal according to an embodiment of the disclosure.

Although not illustrated in FIG. 13, terminals 1300 and 1350 may include eUICCs and LPAs therein as illustrated in FIG. 12.

Although not illustrated in FIG. 13, the first terminal 1300 may have a 'profile tranfer configuration'. The `profile tranfer configuration' may be included in a profile or profile metadata, may exist in an independent area rather than the profile and the profile metadata, or may be overlappingly or separately stored in the profile, the profile metadata, and the independent area. The 'profile tranfer configuration' may further include one or more pieces of signature information generated on the basis of the corresponding information. One or more pieces of signature information may be information generated by, for example, an RSP server, a mobile operator, a terminal manufacturer, an eUICC, or an eUICC manufacturer. Further, one or more pieces of signature information may further include for example, authentication information for an RSP server, a mobile operator, a terminal manufacturer, an eUICC, or an eUICC manufacturer.

According to various embodiments, the 'profile tranfer configuration' may be acquired at a necessary time point in the state in which the profile tranfer configuration is not pre-occupied by the terminal. At this time, the 'profile tranfer configuration' may be generated by the mobile operator, the RSP server, or cooperation between the mobile operator and the RSP server according to a request from the terminal and transmitted to the terminal. Alternatively, the `profile tranfer configuration' may be generated by cooperation between the terminal and at least one entity of the mobile operator and the RSP server.

According to various embodiments, the 'profile tranfer configuration' within the terminal may be updated by the mobile operator, the RSP server, or cooperation between the mobile operator and the RSP server. Alternatively, the `profile tranfer configuration' may be updated by cooperation between the terminal and at least one entity of the mobile operator and the RSP server. A time point and a method of the update may be determined by a policy of the mobile operator, the RSP server, or the terminal manufacturer.

According to various embodiments, the `profile tranfer configuration' is a policy indicating whether the profile can transfer between devices, and may be generated by the mobile operator, the RSP server, or cooperation between the mobile operator and the RSP server.

The `profile tranfer configuration' may include a factor (or indication) indicating whether transmission of the corresponding profile between devices is allowed.

Further, when the transmission of the corresponding profile between devices is allowed, the 'profile tranfer configuration' may further selectively include a factor indicating conditions under which the transmission is allowed.

The factor may include, for example, a factor indicating a method of allowed tranfer of the profile between devices. The method of profile tranfer between devices may include a factor indicating whether online tranfer and/or offline tranfer is allowed. When both the online tranfer and the offline tranfer are allowed, a factor indicating which method of tranfer between devices is preferred. Further, when both the online tranfer and the offline tranfer are allowed, a factor indicating whether, when one method fails, another method can be automatically performed may be included. In addition, when both the online tranfer and the offline tranfer are allowed, a factor indicating whether, when one method fails, a user's consent should be obtained to perform another method may be included. A factor indicating whether re-provisioning can be performed when profile tranfer between devices fails may be included. When the online or offline tranfer between devices fails, a factor indicating whether re-provisioning can be performed may be included. At this time, a factor indicating whether the re-provisioning can be automatically performed may be indicated. Further, a factor indicating whether a user's consent should be obtained to perform re-provisioning may be included. When all of the online tranfer, the offline tranfer, and the re-provisioning are allowed, a configuration for sequences of the methods may be included. When the offline tranfer is first attempted and then fails, the online tranfer may be attempted, and when the online tranfer also fails, the re-provisioning may be attempted. However, this is only an example, the sequences of the online tranfer, the offline tranfer, and the re-provisioning may be configured through various methods. When the online tranfer, the offline tranfer, and the re-provisioning are performed in a predetermined order, a factor indicating whether the continuous performance may be automatically conducted may be included. Alternatively, when the online tranfer, the offline tranfer, and the re-provisioning are performed in a predetermined order, a factor indicating whether a user's consent should be obtained whenever the continuous performance is conducted may be included.

In another example of the factor, when the terminal to transmit the profile authenticates the terminal to receive the profile, a factor indicating whether the authentication should be performed using information received from the mobile operator and/or the RSP server may be included. That is, the mobile operator and/or the RSP server may provide authentication information related to the terminal and/or the eUICC which the mobile operator and/or the RSP server can trust and/or verify, and the terminal to transmit the profile may authenticate whether the terminal and/or the eUICC to receive the profile is the terminal and/or the eUICC which the mobile operator and/or the RSP server can trust on the basis of the information.

Referring to FIG. 13, in operation 13000, a profile to be transmitted may be selected. Such a selection process may be performed through a process in which the user directly selects the profile through the user interface (UI) provided by the first terminal 1300 or may be input into the first terminal 1300 through a push input from the remote server, or the first terminal 1300 may access the remote server to read corresponding information. When the first terminal 1300 provides the UI to the user, a list of all profiles installed in the terminal may be provided or only a list of profiles which can currently transfer may be provided through the UI. When a list of profiles which cannot currently transfer is provided, information indicating possibility of tranfer of the profiles shown in the list may be further provided. In addition to the list of the profiles described above, information on the profiles or information on a profile tranfer policy may be further selectively provided through the UI.

In operation 13000, the first terminal 1300 may identify whether the profile can transfer by checking the `profile tranfer configuration'. Further, the first terminal 1300 may select a profile tranfer method by checking the `profile tranfer configuration'. For example, the first terminal 1300 may select a direct connection between the first terminal 1300 and the second terminal 1350 as the profile tranfer method. At this time, the available direct connection may include, for example, Bluetooth, Wi-Fi, and NFC. The first terminal 1300 may select a remote connection between the first terminal 1300 and the second terminal 1350 as the profile tranfer method. For example, a relay server may exist between the first terminal 1300 and the second terminal 1350. The relay server may be a single RSP server and/or a plurality of RSP servers. Alternatively, the relay server may be a predetermined server used for transmitting a single message and/or a plurality of messages. Alternatively, the relay server may be a combination of a single RSP server and/or a plurality of RSP servers and/or a predetermined server used for transmitting a single message and/or a plurality of messages.

Referring to FIG. 13, in operation 13005, the connection may be established between the first terminal 1300 and the second terminal 1350. The connection between the first terminal 1300 and the second terminal 1350 may be a direct device-to-device connection (for example, NFC, Bluetooth, UWB, Wi-Fi-Direct, LTE device-to-device (D2D), and 5G D2D) or a long-distance connection having a remote server (for example, a relay server) located between the first terminal 1300 and the second terminal 1350.

Referring to FIG. 13, in operation 13010, the second terminal 1350 may transmit its own eUICC information (eUICC2.Info1). eUICC2.Info1 may include a predetermined character string (eUICC2.Challenge) generated by the eUICC of the second terminal. eUICC2.Info1 may include (pieces of) information in a version supported by the eUICC of the second terminal. eUICC2.Info1 may include (pieces of) 'certificate information available for verifying the eUICC of the second terminal'. eUICC2.Info1 may include (pieces of) `certificate information available for verifying a eUICC of another terminal'.

Referring to FIG. 13, in operation 13015, the first terminal 1300 may identify received eUICC2.Info1. The first terminal 1300 may identify whether there is a version supported by the first terminal in eUICC versions supported by the second terminal on the basis of received eUICC2.Info1. The first terminal 1300 may select a certificate eUICC1.Cert which can verify the first terminal 1300 on the basis of the received eUICC2.Info1. The first terminal 1300 may select certificate information to be used by the second terminal 1350 on the basis of the received eUICC2.Info1.

In operation 13015, the first terminal 1300 may generate "first terminal authentication information (Device1.Auth)". The "first terminal authentication information (Device1.Auth)" may include at least some or all of eUICC2.Info1. For example, the received eUICC2.Challenge may be included. The "first terminal authentication information (Device1.Auth)" may include a predetermined character string (eUICC1.Challenge) generated by the eUICC of the first terminal.

The "first terminal authentication information (Device1.Auth)" may include certificate information to be used for verifying the second terminal. The "first terminal authentication information (Device1.Auth)" may include certificate chain information related to the certificate eUICC1.Cert which can verify the first terminal.

Some and/or all of the "first terminal authentication information (Device1.Auth)" may be electronically signed using the certificate eUICC1.Cert of the first terminal, and the electronically signed data may be included as a portion of the "first terminal authentication information (Device 1. Auth)" .

Referring to FIG. 13, in operation 13020, the first terminal 1300 may transmit the "first terminal authentication information (Device1.Auth)" to the second terminal 1350.

Referring to FIG. 13, in operation 13025, the second SSP 1350 may verify the received "first terminal authentication information (Device1.Auth)". The second terminal 1350 may check validity of eUICC1.Cert included in the "first terminal authentication information (Device1.Auth)" and further check validity of signature included in the "first terminal authentication information (Device1.Auth)" by using eUICC1.Cert. The second terminal 1350 may check whether a value of eUICC2.Challege included in the "first terminal authentication information (Device1.Auth)" is the same as a value of eUICC2.Challenge transmitted by the second terminal in operation 13010.

The second terminal 1350 may generate "second terminal authentication information (Device2.Auth)". The "second terminal authentication information (Device2.Auth)" may include at least some or all of Device 1. Auth. For example, the received eUICC1.Challenge may be included. The "second terminal authentication information (Device2.Auth)" may include information eUICC2.Info2 for checking eligibility of the eUICC installed in the second terminal. eUICC2.Info2 may be information used for determining whether a profile to be received from the first terminal in the future can be normally installed and operated in the eUICC of the second terminal. For example, eUICC2.Info2 may include hardware and/or software information of the eUICC installed in the second terminal.

The "second terminal authentication information (Device2.Auth)" may include certificate chain information related to the certificate eUICC2.Cert which can verify the second terminal.

Some and/or all of the "second terminal authentication information (Device2.Auth)" may be electronically signed using the certificate eUICC2.Cert of the second terminal, and the electronically signed data may be included as a portion of the "second terminal authentication information (Device2.Auth)".

Referring to FIG. 13, in operation 13030, the second terminal 1350 may transmit the "second terminal authentication information (Device2.Auth)" to the first terminal 1300.

Referring to FIG. 13, in operation 13035, the first terminal 1300 may verify the received "second terminal authentication information (Device2.Auth)". The first terminal 1300 may check validity of eUICC2.Cert included in the "second terminal authentication information (Device2.Auth)" and further check validity of signature included in the "second terminal authentication information (Device2.Auth)" by using eUICC2.Cert. The first terminal 1300 may check whether a value of eUICC1.Challege included in the "second terminal authentication information (Device2.Auth)" is the same as a value of eUICC 1. Challenge transmitted by the first terminal in operation 13020.

The first terminal 1300 may determine whether the profile to be transmitted by the first terminal can be normally installed and operated in the eUICC of the second terminal by identifying information eUICC2.Info2 for checking eligibility of the eUICC included in the "second terminal authentication information (Device2.Auth)".

Referring to FIG. 13, in operation 13040, the first terminal 1300 may transmit a profile package to the second terminal 1350. The second terminal 1350 may install the received profile package.

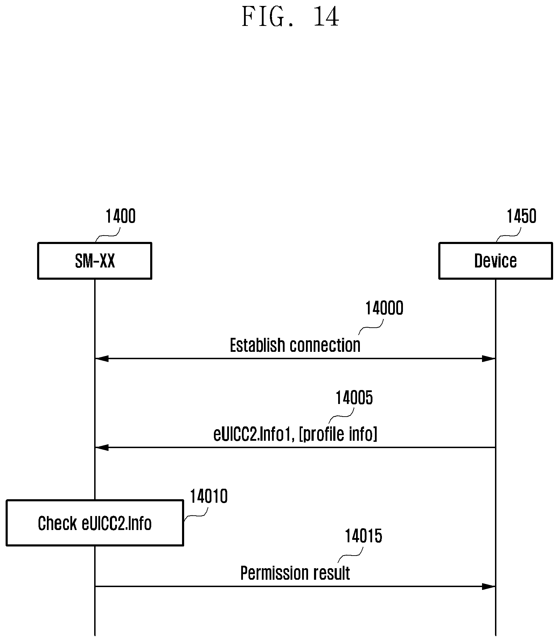

FIG. 14 illustrates a procedure in which the terminal makes a request for permission from the RSP server in order to transmit a profile while the procedure illustrated in FIG. 13 is performed.

A terminal 1450 illustrated in FIG. 14 may be the first terminal 1300 illustrated in FIG. 13.

The "profile tranfer configuration" illustrated in FIG. 13 may include a factor indicating whether permission of the mobile operator and/or the RSP server is needed when the profile is transmitted between devices. When permission of the mobile operator and/or the RSP server is needed to transmit the profile between devices, a process for permission may be performed as a portion of operation 13015 and/or operation 13035 of FIG. 13. However, the process of receiving permission of the mobile operator and/or the RSP server does not have to be performed as the portion of operation 13015 and/or operation 13035, and may be performed at a predetermined moment during the procedure illustrated in FIG. 13. Information indicating when the permission should be received from the mobile operator and/or the RSP server may also be included as the portion of the `profile tranfer configuration'.

When permission of the mobile operator and/or the RSP service is needed for transmission of the profile between devices, the following process may be performed as a portion of operation 13000 and/or operation 13015 and/or 13035 of FIG. 13.

Referring to FIG. 14, in operation 14000, the connection may be generated between the RSP server 1400 and the terminal 1450.

Referring to FIG. 14, in operation 14005, the terminal 1450 may transmit information eUICC2.Info of the second terminal 1350 to receive the profile to the RSP server 1400.

When the process of FIG. 14 is performed in operation 13015 of FIG. 13, eUICC2.Info may include some and/or all of the information of eUICC2.Info1 illustrated in FIG. 13.

When the process of FIG. 14 is performed in operation 13035 of FIG. 13, eUICC2.Info may include some and/or all of the information of eUICC2.Info1 illustrated in FIG. 13. Further, some and/or all of eUICC2.Info2 illustrated in FIG. 13 may be further included.

In operation 14005, the terminal 1450 may further selectively transmit information on the profile to be transmitted to the second terminal 1350 by the terminal to the RSP server 1400. The information on the profile may include an identifier of the profile (ICCID) and/or profile abstract information (profile metadata).

Referring to FIG. 14, in operation 14010, the RSP server 1400 may perform the following process by checking the received eUICC2.Info.

The RSP server 1400 may determine whether the second terminal 1350 can be mutually verified by the RSP server on the basis of the received eUICC2.Info. For example, the RSP server 1400 may determine whether the second terminal 1350 can be mutually authenticated using information of eUICC2.Info1 included in eUICC2.Info.

The RSP server 1400 may determine whether the profile can be properly installed and operated in the second terminal 1350 on the basis of the received eUICC2.Info. For example, the RSP server 1400 may determine whether the corresponding profile can be normally installed and operated in the second terminal 1350 on the basis of information of eUICC2.Info2 included in eUICC2.Info and the received profile information.

Referring to FIG. 14, in operation 14015, the RSP server 1400 may transmit a permission determination result to the terminal 1450. For example, the RSP server 1400 may transmit a message indicating that profile transmission is permitted to the terminal 1450. In another example, the RSP server 1400 may transmit a message indicating that profile transmission is not permitted to the terminal 1450. At this time, the message transmitted from the RSP server 1400 to the terminal 1450 may be electronically signed using a certificate of the RSP server, and the electronically signed value may also be transmitted to the terminal 1450.

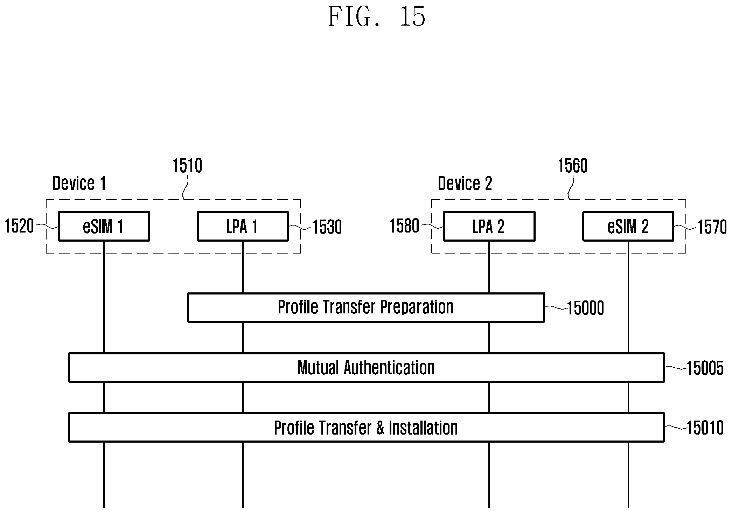

FIG. 15 conceptually illustrates a procedure in which one terminal transmits a profile to another terminal according to an embodiment of the disclosure.

According to various embodiments, the terminal may include at least one LTA and at least one eSIM. For example, as illustrated in the example of FIG. 15, a first terminal 1510 may include a first LBA 1530 and a first eSIM 1520, and a second terminal 1560 may include a second LPA 1580 and a second eSIM 1570.

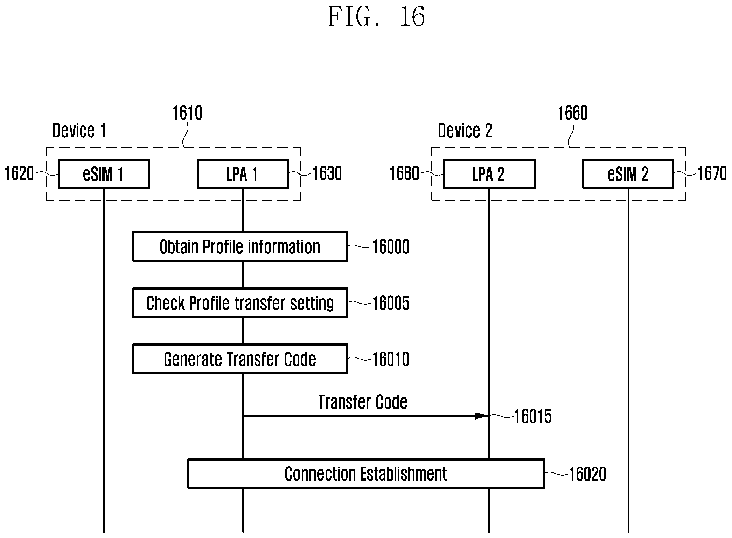

Referring to FIG. 15, in operation 15000, the first LPA 1530 of the first terminal 1510 and the second LPA 1570 of the second terminal 1560 may perform a preparation procedure required for transmitting a profile (profile transmission preparation procedure). A detailed description of the procedure is made with reference to a detailed description of FIG. 16 below.

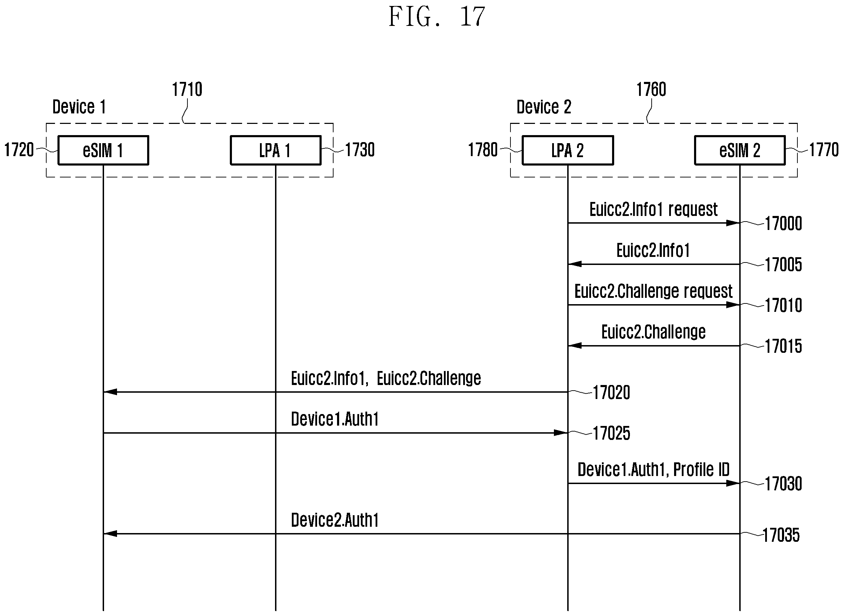

Referring to FIG. 15, in operation 15005, a mutual authentication process may be performed between the first terminal 1510 and the second terminal 1560. A detailed description of the procedure is made with reference to a detailed description of FIG. 17 below.

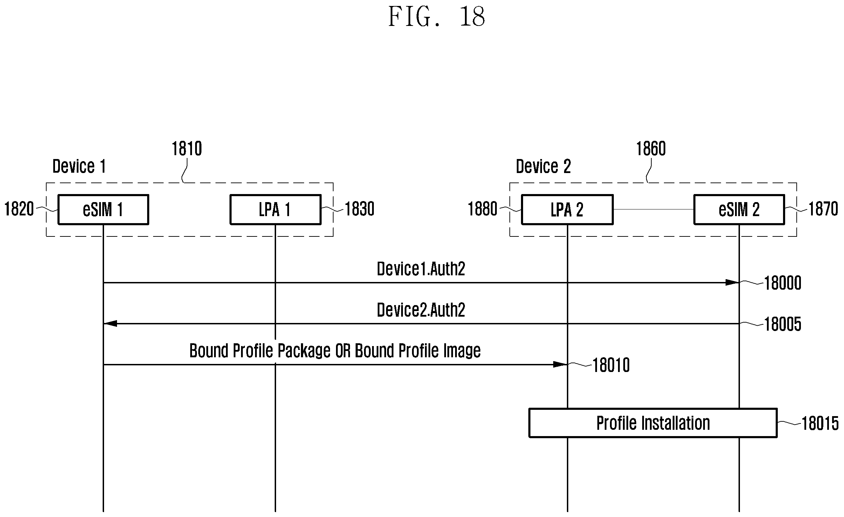

Referring to FIG. 15, in operation 15010, a profile may be transmitted from the first terminal 1510 to the second terminal 1560, and a procedure of installing the transmitted profile in the second terminal may be performed. A detailed description of the procedure is made with reference to a detailed description of FIG. 18 below.

FIG. 16 illustrates a detailed procedure of the profile transmission preparation procedure among the procedures illustrated in FIG. 15 according to an embodiment of the disclosure.

Referring to FIG. 16, the terminal may include at least one LPA and at least one eSIM. For example, the first terminal 1610 may include a first LPA 1630 and a first eSIM 1620, and a second terminal 1660 may include a second LPA 1680 and a second eSIM 1670.

According to various embodiments, the first terminal 1610 may have pre-installed profiles, and may further have metadata associated with the pre-installed profiles. According to various embodiments, the first terminal 1610 may have `profile identifiers' related to the pre-installed profiles.

According to various embodiments, the first terminal 1610 may have a `profile tranfer configuration' related to the pre-installed profiles. According to various embodiments, the `profile tranfer configuration' is a series of policies related to tranfer of the corresponding profile between devices and may be generated by a mobile operator, an RSP server, or cooperation between the mobile operator and the RSP server. According to various embodiments, the `profile tranfer configuration' within the terminal may be updated by the mobile operator, the RSP server, or cooperation between the mobile operator and the RSP server. Alternatively, the `profile tranfer configuration' may be updated by cooperation between the terminal and at least one entity of the mobile operator and the RSP server. A time point and/or a method of the update of the `profile tranfer configuration' may be determined by a policy of the mobile operator, the RSP server, or the terminal manufacturer.

The `profile tranfer configuration' may include a factor (or indication) indicating whether transmission of the corresponding profile between devices is allowed. Further, when transmission of the corresponding profile between devices is allowed, the `profile tranfer configuration' may further selectively include a factor indicating conditions under which the transmission is allowed.

For example, the form of the available connection for transmission between devices may be included. At this time, the connection allowed for transmission between devices may be a direct device-to-device connection (for example, a wireless connection such as NFC, Bluetooth, UWB, Wi-Fi-Direct, LTE device-to-device (D2D), and 5G D2D, or a wired connection through a cable) or a long-distance connection having a remote server (for example, a relay server) located between the first LBA 1630 and the second LBA 1690.

In another example, the form of transmission of the corresponding profile may be configured. The profile may be transmitted in the form of a profile package or in the form of a profile image. The profile tranfer configuration may include information indicating which scheme(s) are allowed among the available profile transmission forms.

The factors may be electronically signed by at least one entity of the RSP server, the mobile operator, the terminal manufacturer, the eUICC, and the eUICC manufacturer. The corresponding electronic signature value may be stored in the first terminal as a portion of the `profile tranfer configuration' or along with the `profile tranfer configuration'.

Referring to FIG. 16, in operation 16000, the first LPA 1630 may acquire information on a profile to be transmitted. Alternatively, the information on the profile to be transmitted may be transferred to the first LPA 1630. For example, the first LPA 1630 may acquire information on the profile to be transmitted as the user receives a user input of selecting the profile through the UI provided by the first terminal 1610, the information on the profile to be transmitted may be input into the first LPA 1630 through a push input from a remote server, or the first LPA 1630 may access the remote server to read the information on the profile to be transmitted.

Referring to FIG. 16, in operation 16005, the first LPA 1630 may identify whether the corresponding profile can be transmitted using the `profile tranfer configuration'. Further, the first LPA 1630 may identify the type of available connections for transmission of the corresponding profile between devices by checking the `profile tranfer configuration'. In addition, the first LPA 1630 may identify the form (profile image or profile package) in which the corresponding profile can be transmitted by checking the `profile tranfer configuration'.

Referring to FIG. 16, in operation 16010, the first LPA 1630 may generate a `profile transmission code'. The profile transmission code may include a `profile identifier' of a profile to be transmitted. The profile transmission code may include an address of the RSP server related to the profile to be transmitted. The profile transmission code may further include other information (for example, metadata of the profile or some of the metadata) indicating attributes of the profile. The profile transmission code may include information required for the connection between two terminals made in operation 16020. For example, information required for the Wi-Fi connection between two terminals (for example, an SSID and/or a BSSID of the second terminal 1660, a pre shared key to be used for authenticating the connection between two terminals, an IP address of the second terminal 1660, and a port number to be used for communication between two terminals) may be included.

Referring to FIG. 16, in operation 16015, the profile transmission code generated in operation 16010 may be transmitted from the first LPA 1630 to the second LPA 1680. The profile transmission code may be transmitted through various methods.

For example, the first LPA 1630 may provide information which should be transmitted to the second LPA 1680 to the first user of the first terminal 1610 through the UI of the first terminal 1610. The first user may provide the received information to the second user of the second terminal 1660. The second user may input the received information into the second LPA 1680 through the UI of the second terminal 1660.

Alternatively, the first LPA 1630 may make the information which should be transmitted to the second LPA 1680 in the form of an image (for example, QR code) and display the image on the screen of the first terminal 1610, and the second user may scan the image displayed on the screen of the first terminal 1610 through the second terminal 1660 to transmit the information to the second LPA 1680.

Alternatively, the first LPA 1630 may establish the connection between the first LPA 1630 and the second LPA 1680 and transmit the information which should be transmitted through the established connection. At this time, the connection established between the first LPA 1630 and the second LPA 1680 may be a direct device-to-device connection (for example, a wireless connection such as NFC, Bluetooth, UWB, Wi-Fi-Direct, LTE device-to-device (D2D), and 5G D2D, or a wired connection through a cable) or a long-distance connection having a remote server (for example, a relay server) located between the first LPA 1630 and the second LPA 1680.

Referring to FIG. 16, in operation 16020, the connection may be established (or configured) between the first LPA 1630 and the second LPA 1680. When information required for the connection is transmitted in operation 16015, the first LPA 1630 and the second LPA 1680 may establish the connection using the information. The connection between the first LPA 1630 and the second LPA 1680 may be a direct device-to-device connection (for example, a wireless connection such as NFC, Bluetooth, UWB, Wi-Fi-Direct, LTE device-to-device (D2D), and 5G D2D, or a wired connection through a cable) or a long-distance connection having a remote server (for example, a relay server) located between the first LPA 1630 and the second LPA 1680.

FIG. 17 illustrates a detailed procedure in which a mutual authentication between the first terminal 1510 and the second terminal 1560 is performed among the procedures illustrated in FIG. 15 according to an embodiment of the disclosure.

Referring to FIG. 17, the terminal may include at least one LPA and at least one eSIM. For example, a first terminal 1710 may include a first LPA 1730 and a first eSIM 1720, and a second terminal 1760 may include a second LPA 1780 and a second eSIM 1770.

Referring to FIG. 17, in operation 17000, the second LPA 1780 may make a request for Euicc2.Info1 to the second eSIM 1770.

Referring to FIG. 17, in operation 17005, the second eSIM 1770 may configure Euicc2.Info1. Euicc2.Info1 may include the following information.
- Certificate information which can be used by the first eSIM for verifying the second eSIM.
- Certificate information which can be used by the second eSIM for verifying the first eSIM.
- Version information supported by the second terminal

Further, the second eSIM may provide Euicc2.Info1 to the second LPA 1780.

Referring to FIG. 17, in operation 17010, the second LPA 1780 may make a request for Euicc2.Challenge to the second eSIM 1770.

Referring to FIG. 17, in operation 17015, the second eSIM 1770 may generate Euicc2.Challenge. Euicc2.Challenge may be a random number generated by the second eSIM 1770. The second eSIM 1770 may provide Euicc2.Challenge to the second LPA 1780.

Referring to FIG. 17, in operation 17020, the second LPA 1780 may provide Euicc2.Info1 to the first eSIM 1720 via the first LPA 1730. Further, the second LPA 1780 may provide Euicc2.Challenge to the first eSIM 1720 via the first LPA 1730. At this time, the first LPA 1730 may further provide a `profile identifier' of the profile to be transmitted to the first eSIM 1720.

Referring to FIG. 17, in operation 17025, the following process may be performed.

The first eSIM 1720 may select a certificate Euicc 1. Certificate to be used by the first eSIM through 'certificate information which can be used by the second eSIM for verifying the first eSIM' included in Euicc2.Info1.

The first eSIM 1720 may select a certificate to be used by the second eSIM 1770 through 'certificate information which can be used by the first eSIM for verifying the second eSIM' included in Euicc2.Info1. At this time, information which can refer to the selected certificate information or the selected certificate may be called euiccCiPKIdToBeUsed.

The first eSIM 1720 may identify the `profile tranfer configuration' of the profile associated with the received profile identifier. The first eSIM 1720 may check whether the corresponding profile can be transmitted through transmission between devices.

The first eSIM 1720 may identify whether there is a version supported by the first eSIM by checking version information supported by the second terminal included in Euicc2.Info1.

The first eSIM 1720 may generate a session ID (transaction ID) used to refer to future communication with the second eSIM.

The first eSIM 1720 may generate Euicc1.Challenge. Euicc1.Challenge may be a random number generated by the first eSIM 1720.

The first eSIM 1720 may electronically sign all and/or some of the following values. At this time, the electronic signature may be performed using Euicc 1. Certificate.
- Transaction ID
- Euicc1.Challenge
- Euicc2.Challenge

The first eSIM 1720 may transmit all and/or some of the following data to the second LPA 1780 via the first LPA 1730.
- Transaction ID and/or Euicc1.Challenge and/or Euicc2.Challenge, and electronic signature values thereof
- euiccCiPKIdToBeUsed
- Euicc 1. Certificate

The provided data may be called Device1.Auth1.

Referring to FIG. 17, in operation 17030, the second LPA 1780 may transmit all and/or some of the following data to the second eSIM 1770.
- Device1.Auth1
- A profile identifier of the profile which the first terminal transmits to the second terminal

Referring to FIG. 17, in operation 17035, the following process may be performed.

The second eSIM 1770 may verify validity of Euicc1.Certificate.

The second eSIM 1770 may verify an electronic signature value included in Device1.Auth1.

The second eSIM 1770 may check whether Euicc2.Challenege included in Device1.Auth1 is the same as Euicc2.Challenge transmitted by the second eSIM in operation 17020.

The second eSIM 1770 may select a certificate Euicc2.Certificate to be used by the second eSIM through euiccCiPKIdToBeUsed.

The second eSIM 1770 may electronically sign all and/or some of the following values. At this time, the electronic signature may be performed using Euicc2.Certificate.
- Transaction ID
- Euicc1.Challenge
- Euicc2.Info2. Euicc2.Info2 may be information which can be used for checking eligibility indicating that the `profile which the first terminal transmits to the second terminal' can be installed and operated in the second terminal. For example, Euicc2.Info2 may include hardware and/or software information of the second eSIM.
- A profile identifier of the profile which the first terminal transmits to the second terminal

The second eSIM 1770 may transmit all and/or some of the following data to the first eSIM 1720 via the second LPA 1780 and the first LPA 1730.
- The transaction ID and/or Euicc1.Challenge and/or Euicc2.Info2 and/or the `profile identifier of the profile to be transmitted to the second terminal by the first terminal' and electronic signature values thereof
- Euicc2.Certificate

The data may be called Device2.Auth1.

FIG. 18 illustrates a detailed procedure in which the profile is transmitted from a first terminal 1810 to a second terminal 1860 and the transmitted profile is installed in the second terminal among the procedures illustrated in FIG. 15 according to an embodiment of the disclosure.

Referring to FIG. 18, the terminal may include at least one LPA and at least one eSIM. For example, a first terminal 1810 may include a first LPA 1830 and a first eSIM 1820, and a second terminal 1860 may include a second LPA 1880 and a second eSIM 1870.

Referring to FIG. 18, in operation 18000, the following process may be performed.

The first eSIM 1820 may verify validity of Euicc2.Certificate.

The first eSIM 1820 may verify an electronic signature value included in Device2.Auth1.

The first eSIM 1820 may check whether Euicc1.Challenege included in Device2.Auth1 is the same as Euicc1.Challenge transmitted by the first eSIM in operation 17025.

The first eSIM 1820 may identify a profile identifier included in Device2.Auth1 and specify a profile to be transmitted by the first eSIM. Alternatively, it may be checked whether the profile identifier included in Device2.Auth1 is the same as the profile identifier received in operation 17020.

The first eSIM 1820 may identify the `profile tranfer configuration' of the profile associated with the received profile identifier. The first eSIM 1820 may check whether the corresponding profile can be transmitted through transmission between devices. The first eSIM 1820 may identify a connection type for transmission between devices in which the corresponding profile can be transmitted. The first eSIM 1820 may identify the form (for example, a profile image and/or a profile package) in which the corresponding profile can be transmitted.

The first eSIM 1820 may check eligibility indicating whether the corresponding profile can be normally installed and operated in the second terminal (for example, second eSIM). At this time, the profile identifier and Euicc2.Info2 may be used to check eligibility.

Through the above process, the first eSIM 1820 may determine the form in which the corresponding profile can be transmitted and then generate transferOption by using the value. transferOption may include information on the form(s) in which the corresponding profile can be transmitted among the following methods.
- Profile image
- Profile package

The first eSIM 1820 may electronically sign all and/or some of the following values. At this time, the electronic signature may be performed using Euicc 1. Certificate.
- Transaction ID
- transferOption

The first eSIM 1820 may transmit the transaction ID and/or transferOption, and electronic signature values thereof to the second eSIM 1870 via the first LPA 1830 and the second LPA 1880. The transmitted values may be called Device1.Auth2.

The first terminal 1810 may identify the received transferOption and receive a user's consent to transmission of the profile in the corresponding form.

Referring to FIG. 18, in operation 18005, the following process may be performed.

The second eSIM 1870 may verify an electronic signature value included in Device1.Auth2.

The second eSIM 1870 may check transferOption to identify the form in which the second eSIM receives the profile.

The second eSIM 1870 may generate a pair of encryption keys (for example, a public key otPK.EUICC2.KA and a secret key otSK.EUICC2.KA corresponding thereto) required for generating a session key to be used for encryption communication with the first eSIM 1820.

The second eSIM 1870 may electronically sign all and/or some of the following values. At this time, the electronic signature may be performed using Euicc2.Certificate.
- Transaction ID
- otPK.EUICC2.KA

The second eSIM 1870 may transmit the transaction ID and/or otPK.EUICC2.KA, and electronic signature values thereof to the first eSIM 1820 via the second LPA 1880 and the first LPA 1830. The transmitted values may be called Device2.Auth2.

Referring to FIG. 18, in operation 18010, the following process may be performed.

The first eSIM 1820 may verify an electronic signature value included in Device2.Auth2.

The first eSIM 1820 may generate a pair of encryption keys (for example, a public key otPK.EUICC1.KA and a secret key otSK.EUICC1.KA corresponding thereto) required for generating a session key to be used for encryption communication with the second eSIM 1870.

The first eSIM 1820 may generate a session key for encryption communication with the second terminal 1860 by using otSK.EUICC1.KA generated by the first eSIM and the received otPK.EUICC2.KA.

The first eSIM 1820 may prepare a profile image and/or a profile package to be transmitted to the second terminal 1860. At this time, the prepared profiled image or profile package may be called a bound profile package or a bound profile image. Further, the bound profile package and the bound profile image may be collectively called a bound profile.

In such a preparation process, all and/or some of the 'profile image and/or the profile package to be transmitted' may be encrypted by the previously generated session key. Further, all and/or some of the `profile image and/or the profile package to be transmitted' may be electronically signed using Euicc 1. Certificate, and the value may be included as a portion of the bound profile. In addition, otPK.EUICC1.KA may be included as a portion of the bound profile.

The first eSIM 1820 may transmit the bound profile to the second LPA 1880 via the first LPA 1830. At this time, metadata related to the corresponding profile may also be transmitted. At this time, the metadata may be included as a portion of the bound profile or may be transmitted as data separate from the bound profile.

The first eSIM 1820 may delete the corresponding profile.

Referring to FIG. 18, in operation 18015, the following process may be performed.

The second terminal 1860 may identify the transmitted metadata.

The second terminal 1860 may receive a user's consent in connection with installation of the received bound profile.

The second terminal 1860 may install the received bound profile in the second eSIM 1870. The process may be performed by cooperation between the second LPA 1880 and the second eSIM 1870. When there is encrypted data in the bound profile during the process, the second eSIM 1870 may generate a session key by using otSK.EUICC2.KA and otPK.EUICC1.KA and then decrypt data through the key. Further, when the electronic signature value is included in the bound profile, the second eSIM 1870 may verify validity of the electronic signature value by using Euicc 1. Certificate.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, various modifications and changes may be made thereto without departing from the scope of the disclosure. Therefore, the scope of the disclosure should not be defined as being limited to the embodiments, but should be defined by the appended claims.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the things, unless the relevant context clearly indicates otherwise. As used herein, such an expression as "A or B," "at least one of A and/or B," "A, B, or C," or "at least one of A, B, and/or C" may include all possible combinations of the items enumerated together in a corresponding one of the phrases. As used herein, such expressions as "a first", "a second", "the first", and "the second" may modify corresponding elements regardless of the order or importance thereof, and may be used to simply distinguish a corresponding element from the other elements and does not limit the corresponding elements. It is to be understood that if an element (e.g., a first element) is referred to as "(operatively or communicatively) coupled with/to" or "connected with/to" another element (e.g., a second element), it means that the element may be coupled/connected with/to the other element directly or via another element (e.g., a third element).

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments of the disclosure may be implemented as software (e.g., a program) including instructions that are stored in a storage medium (e.g., an internal memory or external memory) that is readable by a machine (e.g., a computer). The machine is a device that can invoke the stored instructions from the storage medium and operate according to the invoked instructions, and may include terminals according to various embodiments. When the instructions are executed by a processor (e.g., the processor 920 of FIG. 9), the processor may perform functions corresponding to the instructions, with or without using one or more other components under the control of the processor. The instructions may include a code generated by a complier or a code executable by an interpreter.

The machine-readable storage medium may be provided in the form of a non-transitory storage medium. Wherein, the term "non-transitory" simply means that the storage medium is a tangible device, and does not include a signal , but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server. According to various embodiments, each element (e.g., a module or a program) of the above-described elements may include a single entity or multiple entities. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.
For example, the RSP server 1400 may determine whether the second terminal 1350 can be mutually authenticated using information of eUICC2.Info1 included in eUICC2.Info.

The RSP server 1400 may determine whether the profile can be properly installed and operated in the second terminal 1350 on the basis of the received eUICC2.Info. For example, the RSP server 1400 may determine whether the corresponding profile can be normally installed and operated in the second terminal 1350 on the basis of information of eUICC2.Info2 included in eUICC2.Info and the received profile information.

Referring to FIG. 14, in operation 14015, the RSP server 1400 may transmit a permission determination result to the terminal 1450. For example, the RSP server 1400 may transmit a message indicating that profile transmission is permitted to the terminal 1450. In another example, the RSP server 1400 may transmit a message indicating that profile transmission is not permitted to the terminal 1450. At this time, the message transmitted from the RSP server 1400 to the terminal 1450 may be electronically signed using a certificate of the RSP server, and the electronically signed value may also be transmitted to the terminal 1450.

FIG. 15 conceptually illustrates a procedure in which one terminal transmits a profile to another terminal according to an embodiment of the disclosure.

According to various embodiments, the terminal may include at least one LTA and at least one eSIM. For example, as illustrated in the example of FIG. 15, a first terminal 1510 may include a first LBA 1530 and a first eSIM 1520, and a second terminal 1560 may include a second LPA 1580 and a second eSIM 1570.

Referring to FIG. 15, in operation 15000, the first LPA 1530 of the first terminal 1510 and the second LPA 1570 of the second terminal 1560 may perform a preparation procedure required for transmitting a profile (profile transmission preparation procedure). A detailed description of the procedure is made with reference to a detailed description of FIG. 16 below.

Referring to FIG. 15, in operation 15005, a mutual authentication process may be performed between the first terminal 1510 and the second terminal 1560. A detailed description of the procedure is made with reference to a detailed description of FIG. 17 below.

Referring to FIG. 15, in operation 15010, a profile may be transmitted from the first terminal 1510 to the second terminal 1560, and a procedure of installing the transmitted profile in the second terminal may be performed. A detailed description of the procedure is made with reference to a detailed description of FIG. 18 below.

FIG. 16 illustrates a detailed procedure of the profile transmission preparation procedure among the procedures illustrated in FIG. 15 according to an embodiment of the disclosure.

Referring to FIG. 16, the terminal may include at least one LPA and at least one eSIM. For example, the first terminal 1610 may include a first LPA 1630 and a first eSIM 1620, and a second terminal 1660 may include a second LPA 1680 and a second eSIM 1670.

According to various embodiments, the first terminal 1610 may have pre-installed profiles, and may further have metadata associated with the pre-installed profiles. According to various embodiments, the first terminal 1610 may have 'profile identifiers' related to the pre-installed profiles.

According to various embodiments, the first terminal 1610 may have a 'profile tranfer configuration' related to the pre-installed profiles. According to various embodiments, the `profile tranfer configuration' is a series of policies related to tranfer of the corresponding profile between devices and may be generated by a mobile operator, an RSP server, or cooperation between the mobile operator and the RSP server. According to various embodiments, the 'profile tranfer configuration' within the terminal may be updated by the mobile operator, the RSP server, or cooperation between the mobile operator and the RSP server. Alternatively, the 'profile tranfer configuration' may be updated by cooperation between the terminal and at least one entity of the mobile operator and the RSP server. A time point and/or a method of the update of the `profile tranfer configuration' may be determined by a policy of the mobile operator, the RSP server, or the terminal manufacturer.

The `profile tranfer configuration' may include a factor (or indication) indicating whether transmission of the corresponding profile between devices is allowed. Further, when transmission of the corresponding profile between devices is allowed, the `profile tranfer configuration' may further selectively include a factor indicating conditions under which the transmission is allowed.

For example, the form of the available connection for transmission between devices may be included. At this time, the connection allowed for transmission between devices may be a direct device-to-device connection (for example, a wireless connection such as NFC, Bluetooth, UWB, Wi-Fi-Direct, LTE device-to-device (D2D), and 5G D2D, or a wired connection through a cable) or a long-distance connection having a remote server (for example, a relay server) located between the first LBA 1630 and the second LBA 1690.

In another example, the form of transmission of the corresponding profile may be configured. The profile may be transmitted in the form of a profile package or in the form of a profile image. The profile tranfer configuration may include information indicating which scheme(s) are allowed among the available profile transmission forms.

The factors may be electronically signed by at least one entity of the RSP server, the mobile operator, the terminal manufacturer, the eUICC, and the eUICC manufacturer. The corresponding electronic signature value may be stored in the first terminal as a portion of the `profile tranfer configuration' or along with the 'profile tranfer configuration'.

Referring to FIG. 16, in operation 16000, the first LPA 1630 may acquire information on a profile to be transmitted. Alternatively, the information on the profile to be transmitted may be transferred to the first LPA 1630. For example, the first LPA 1630 may acquire information on the profile to be transmitted as the user receives a user input of selecting the profile through the UI provided by the first terminal 1610, the information on the profile to be transmitted may be input into the first LPA 1630 through a push input from a remote server, or the first LPA 1630 may access the remote server to read the information on the profile to be transmitted.

Referring to FIG. 16, in operation 16005, the first LPA 1630 may identify whether the corresponding profile can be transmitted using the `profile tranfer configuration'. Further, the first LPA 1630 may identify the type of available connections for transmission of the corresponding profile between devices by checking the `profile tranfer configuration'. In addition, the first LPA 1630 may identify the form (profile image or profile package) in which the corresponding profile can be transmitted by checking the `profile tranfer configuration'.

Referring to FIG. 16, in operation 16010, the first LPA 1630 may generate a 'profile transmission code'. The profile transmission code may include a `profile identifier' of a profile to be transmitted. The profile transmission code may include an address of the RSP server related to the profile to be transmitted. The profile transmission code may further include other information (for example, metadata of the profile or some of the metadata) indicating attributes of the profile. The profile transmission code may include information required for the connection between two terminals made in operation 16020. For example, information required for the Wi-Fi connection between two terminals (for example, an SSID and/or a BSSID of the second terminal 1660, a pre shared key to be used for authenticating the connection between two terminals, an IP address of the second terminal 1660, and a port number to be used for communication between two terminals) may be included.

Referring to FIG. 16, in operation 16015, the profile transmission code generated in operation 16010 may be transmitted from the first LPA 1630 to the second LPA 1680. The profile transmission code may be transmitted through various methods.

For example, the first LPA 1630 may provide information which should be transmitted to the second LPA 1680 to the first user of the first terminal 1610 through the UI of the first terminal 1610. The first user may provide the received information to the second user of the second terminal 1660. The second user may input the received information into the second LPA 1680 through the UI of the second terminal 1660.

Alternatively, the first LPA 1630 may make the information which should be transmitted to the second LPA 1680 in the form of an image (for example, QR code) and display the image on the screen of the first terminal 1610, and the second user may scan the image displayed on the screen of the first terminal 1610 through the second terminal 1660 to transmit the information to the second LPA 1680.

Alternatively, the first LPA 1630 may establish the connection between the first LPA 1630 and the second LPA 1680 and transmit the information which should be transmitted through the established connection. At this time, the connection established between the first LPA 1630 and the second LPA 1680 may be a direct device-to-device connection (for example, a wireless connection such as NFC, Bluetooth, UWB, Wi-Fi-Direct, LTE device-to-device (D2D), and 5G D2D, or a wired connection through a cable) or a long-distance connection having a remote server (for example, a relay server) located between the first LPA 1630 and the second LPA 1680.

Referring to FIG. 16, in operation 16020, the connection may be established (or configured) between the first LPA 1630 and the second LPA 1680. When information required for the connection is transmitted in operation 16015, the first LPA 1630 and the second LPA 1680 may establish the connection using the information. The connection between the first LPA 1630 and the second LPA 1680 may be a direct device-to-device connection (for example, a wireless connection such as NFC, Bluetooth, UWB, Wi-Fi-Direct, LTE device-to-device (D2D), and 5G D2D, or a wired connection through a cable) or a long-distance connection having a remote server (for example, a relay server) located between the first LPA 1630 and the second LPA 1680.

FIG. 17 illustrates a detailed procedure in which a mutual authentication between the first terminal 1510 and the second terminal 1560 is performed among the procedures illustrated in FIG. 15 according to an embodiment of the disclosure.

Referring to FIG. 17, the terminal may include at least one LPA and at least one eSIM. For example, a first terminal 1710 may include a first LPA 1730 and a first eSIM 1720, and a second terminal 1760 may include a second LPA 1780 and a second eSIM 1770.

Referring to FIG. 17, in operation 17000, the second LPA 1780 may make a request for Euicc2.Info1 to the second eSIM 1770.

Referring to FIG. 17, in operation 17005, the second eSIM 1770 may configure Euicc2.Info1. Euicc2.Info1 may include the following information.
- Certificate information which can be used by the first eSIM for verifying the second eSIM.
- Certificate information which can be used by the second eSIM for verifying the first eSIM.
- Version information supported by the second terminal

Further, the second eSIM may provide Euicc2.Info1 to the second LPA 1780.

Referring to FIG. 17, in operation 17010, the second LPA 1780 may make a request for Euicc2.Challenge to the second eSIM 1770.

Referring to FIG. 17, in operation 17015, the second eSIM 1770 may generate Euicc2.Challenge. Euicc2.Challenge may be a random number generated by the second eSIM 1770. The second eSIM 1770 may provide Euicc2.Challenge to the second LPA 1780.

Referring to FIG. 17, in operation 17020, the second LPA 1780 may provide Euicc2.Info1 to the first eSIM 1720 via the first LPA 1730. Further, the second LPA 1780 may provide Euicc2.Challenge to the first eSIM 1720 via the first LPA 1730. At this time, the first LPA 1730 may further provide a `profile identifier' of the profile to be transmitted to the first eSIM 1720.

Referring to FIG. 17, in operation 17025, the following process may be performed.

The first eSIM 1720 may select a certificate Euicc 1. Certificate to be used by the first eSIM through `certificate information which can be used by the second eSIM for verifying the first eSIM' included in Euicc2.Info1.

The first eSIM 1720 may select a certificate to be used by the second eSIM 1770 through 'certificate information which can be used by the first eSIM for verifying the second eSIM' included in Euicc2.Info1. At this time, information which can refer to the selected certificate information or the selected certificate may be called euiccCiPKIdToBeUsed.

The first eSIM 1720 may identify the `profile tranfer configuration' of the profile associated with the received profile identifier. The first eSIM 1720 may check whether the corresponding profile can be transmitted through transmission between devices.

The first eSIM 1720 may identify whether there is a version supported by the first eSIM by checking version information supported by the second terminal included in Euicc2.Info1.

The first eSIM 1720 may generate a session ID (transaction ID) used to refer to future communication with the second eSIM.

The first eSIM 1720 may generate Euicc1.Challenge. Euicc1.Challenge may be a random number generated by the first eSIM 1720.

The first eSIM 1720 may electronically sign all and/or some of the following values. At this time, the electronic signature may be performed using Euicc 1. Certificate.
- Transaction ID
- Euicc1.Challenge
- Euicc2.Challenge

The first eSIM 1720 may transmit all and/or some of the following data to the second LPA 1780 via the first LPA 1730.
- Transaction ID and/or Euicc1.Challenge and/or Euicc2.Challenge, and electronic signature values thereof
- euiccCiPKIdToBeUsed
- Euicc 1. Certificate

The provided data may be called Device1.Auth1.

Referring to FIG. 17, in operation 17030, the second LPA 1780 may transmit all and/or some of the following data to the second eSIM 1770.
- Device1.Auth1
- A profile identifier of the profile which the first terminal transmits to the second terminal

Referring to FIG. 17, in operation 17035, the following process may be performed.

The second eSIM 1770 may verify validity of Euicc 1. Certificate.

The second eSIM 1770 may verify an electronic signature value included in Device1.Auth1.

The second eSIM 1770 may check whether Euicc2.Challenege included in Device1.Auth1 is the same as Euicc2.Challenge transmitted by the second eSIM in operation 17020.

The second eSIM 1770 may select a certificate Euicc2.Certificate to be used by the second eSIM through euiccCiPKIdToBeUsed.

The second eSIM 1770 may electronically sign all and/or some of the following values. At this time, the electronic signature may be performed using Euicc2.Certificate.
- Transaction ID
- Euicc1.Challenge
- Euicc2.Info2. Euicc2.Info2 may be information which can be used for checking eligibility indicating that the `profile which the first terminal transmits to the second terminal' can be installed and operated in the second terminal. For example, Euicc2.Info2 may include hardware and/or software information of the second eSIM.
- A profile identifier of the profile which the first terminal transmits to the second terminal

The second eSIM 1770 may transmit all and/or some of the following data to the first eSIM 1720 via the second LPA 1780 and the first LPA 1730.
- The transaction ID and/or Euicc1.Challenge and/or Euicc2.Info2 and/or the `profile identifier of the profile to be transmitted to the second terminal by the first terminal' and electronic signature values thereof
- Euicc2.Certificate

The data may be called Device2.Auth1.

FIG. 18 illustrates a detailed procedure in which the profile is transmitted from a first terminal 1810 to a second terminal 1860 and the transmitted profile is installed in the second terminal among the procedures illustrated in FIG. 15 according to an embodiment of the disclosure.

Referring to FIG. 18, the terminal may include at least one LPA and at least one eSIM. For example, a first terminal 1810 may include a first LPA 1830 and a first eSIM 1820, and a second terminal 1860 may include a second LPA 1880 and a second eSIM 1870.

Referring to FIG. 18, in operation 18000, the following process may be performed.

The first eSIM 1820 may verify validity of Euicc2.Certificate.

The first eSIM 1820 may verify an electronic signature value included in Device2.Auth1.

The first eSIM 1820 may check whether Euicc1.Challenege included in Device2.Auth1 is the same as Euicc1.Challenge transmitted by the first eSIM in operation 17025.

The first eSIM 1820 may identify a profile identifier included in Device2.Auth1 and specify a profile to be transmitted by the first eSIM. Alternatively, it may be checked whether the profile identifier included in Device2.Auth1 is the same as the profile identifier received in operation 17020.

The first eSIM 1820 may identify the `profile tranfer configuration' of the profile associated with the received profile identifier. The first eSIM 1820 may check whether the corresponding profile can be transmitted through transmission between devices. The first eSIM 1820 may identify a connection type for transmission between devices in which the corresponding profile can be transmitted. The first eSIM 1820 may identify the form (for example, a profile image and/or a profile package) in which the corresponding profile can be transmitted.

The first eSIM 1820 may check eligibility indicating whether the corresponding profile can be normally installed and operated in the second terminal (for example, second eSIM). At this time, the profile identifier and Euicc2.Info2 may be used to check eligibility.

Through the above process, the first eSIM 1820 may determine the form in which the corresponding profile can be transmitted and then generate transferOption by using the value. transferOption may include information on the form(s) in which the corresponding profile can be transmitted among the following methods.
- Profile image
- Profile package

The first eSIM 1820 may electronically sign all and/or some of the following values. At this time, the electronic signature may be performed using Euicc 1. Certificate.
- Transaction ID
- transferOption

The first eSIM 1820 may transmit the transaction ID and/or transferOption, and electronic signature values thereof to the second eSIM 1870 via the first LPA 1830 and the second LPA 1880. The transmitted values may be called Device1.Auth2.

The first terminal 1810 may identify the received transferOption and receive a user's consent to transmission of the profile in the corresponding form.

Referring to FIG. 18, in operation 18005, the following process may be performed.

The second eSIM 1870 may verify an electronic signature value included in Device1.Auth2.

The second eSIM 1870 may check transferOption to identify the form in which the second eSIM receives the profile.

The second eSIM 1870 may generate a pair of encryption keys (for example, a public key otPK.EUICC2.KA and a secret key otSK.EUICC2.KA corresponding thereto) required for generating a session key to be used for encryption communication with the first eSIM 1820.

The second eSIM 1870 may electronically sign all and/or some of the following values. At this time, the electronic signature may be performed using Euicc2.Certificate.
- Transaction ID
- otPK.EUICC2.KA

The second eSIM 1870 may transmit the transaction ID and/or otPK.EUICC2.KA, and electronic signature values thereof to the first eSIM 1820 via the second LPA 1880 and the first LPA 1830. The transmitted values may be called Device2.Auth2.

Referring to FIG. 18, in operation 18010, the following process may be performed.

The first eSIM 1820 may verify an electronic signature value included in Device2.Auth2.

The first eSIM 1820 may generate a pair of encryption keys (for example, a public key otPK.EUICC1.KA and a secret key otSK.EUICC1.KA corresponding thereto) required for generating a session key to be used for encryption communication with the second eSIM 1870.

The first eSIM 1820 may generate a session key for encryption communication with the second terminal 1860 by using otSK.EUICC1.KA generated by the first eSIM and the received otPK.EUICC2.KA.

The first eSIM 1820 may prepare a profile image and/or a profile package to be transmitted to the second terminal 1860. At this time, the prepared profiled image or profile package may be called a bound profile package or a bound profile image. Further, the bound profile package and the bound profile image may be collectively called a bound profile.

In such a preparation process, all and/or some of the `profile image and/or the profile package to be transmitted' may be encrypted by the previously generated session key. Further, all and/or some of the `profile image and/or the profile package to be transmitted' may be electronically signed using Euicc 1. Certificate, and the value may be included as a portion of the bound profile. In addition, otPK.EUICC1.KA may be included as a portion of the bound profile.

The first eSIM 1820 may transmit the bound profile to the second LPA 1880 via the first LPA 1830. At this time, metadata related to the corresponding profile may also be transmitted. At this time, the metadata may be included as a portion of the bound profile or may be transmitted as data separate from the bound profile.

The first eSIM 1820 may delete the corresponding profile.

Referring to FIG. 18, in operation 18015, the following process may be performed.

The second terminal 1860 may identify the transmitted metadata.

The second terminal 1860 may receive a user's consent in connection with installation of the received bound profile.

The second terminal 1860 may install the received bound profile in the second eSIM 1870. The process may be performed by cooperation between the second LPA 1880 and the second eSIM 1870. When there is encrypted data in the bound profile during the process, the second eSIM 1870 may generate a session key by using otSK.EUICC2.KA and otPK.EUICC1.KA and then decrypt data through the key. Further, when the electronic signature value is included in the bound profile, the second eSIM 1870 may verify validity of the electronic signature value by using Euicc 1. Certificate.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, various modifications and changes may be made thereto without departing from the scope of the disclosure. Therefore, the scope of the disclosure should not be defined as being limited to the embodiments, but should be defined by the appended claims.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the things, unless the relevant context clearly indicates otherwise. As used herein, such an expression as "A or B," "at least one of A and/or B," "A, B, or C," or "at least one of A, B, and/or C" may include all possible combinations of the items enumerated together in a corresponding one of the phrases. As used herein, such expressions as "a first", "a second", "the first", and "the second" may modify corresponding elements regardless of the order or importance thereof, and may be used to simply distinguish a corresponding element from the other elements and does not limit the corresponding elements. It is to be understood that if an element (e.g., a first element) is referred to as "(operatively or communicatively) coupled with/to" or "connected with/to" another element (e.g., a second element), it means that the element may be coupled/connected with/to the other element directly or via another element (e.g., a third element).

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments of the disclosure may be implemented as software (e.g., a program) including instructions that are stored in a storage medium (e.g., an internal memory or external memory) that is readable by a machine (e.g., a computer). The machine is a device that can invoke the stored instructions from the storage medium and operate according to the invoked instructions, and may include terminals according to various embodiments. When the instructions are executed by a processor (e.g., the processor 920 of FIG. 9), the processor may perform functions corresponding to the instructions, with or without using one or more other components under the control of the processor. The instructions may include a code generated by a complier or a code executable by an interpreter.

The machine-readable storage medium may be provided in the form of a non-transitory storage medium. Wherein, the term "non-transitory" simply means that the storage medium is a tangible device, and does not include a signal , but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server. According to various embodiments, each element (e.g., a module or a program) of the above-described elements may include a single entity or multiple entities. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method performed by a first smart secure platform, SSP (610, 710), the method comprising:
transmitting (6020), to a second SSP (660, 760), a bundle transfer code to be used for transmitting a secondary platform bundle, SPB;
receiving (7010), from the second SSP (660, 760), information on the second SSP (660, 760);
transmitting (7020), to the second SSP (660, 760), first authentication information for authenticating the first SSP (610, 710) after receiving the information on the second SSP (660, 760);
receiving (7035), from the second SSP (660, 760), second authentication information for authenticating the second SSP (660, 760) and the bundle transfer code, wherein the second authentication information is generated based on a result of the verification of the first authentication information;
verifying (7040) the second authentication information; and
transmitting (7045), to the second SSP (660, 760), the SPB in case that the second authentication information is verified.

2. The method of claim 1, further comprising:
identifying whether to generate a bundle transfer code to be used for transmitting the SSP; and
generating the bundle transfer code, based on the identification.

3. The method of claim 1, further comprising transmitting the bundle transfer code to the second SSP.

4. The method of claim 1,
identifying a secondary platform bundle, SPB, to be transmitted to a second SSP;
determining whether transmission of the SPB is allowed based on bundle transfer configuration information related to the SPB; and
transmitting the SPB to the second SSP, based on the determination.

5. A first smart secure platform, SSP (610, 710), comprising:
a transceiver; and
at least one processor connected to the transceiver,
wherein the at least one processor is configured to:
transmit (6020), to a second SSP (660, 760), a bundle transfer code to be used for transmitting a secondary platform bundle, SPB,
receive (7010), from the second SSP (660, 760), information on the second SSP,
transmit (7020), to the second SSP (660, 760), first authentication information for authenticating the first SSP (610, 710) after receiving the information on the second SSP (660, 760),
receive (7035), from the second SSP (660, 760), second authentication information for authenticating the second SSP (660, 760) and the bundle transfer code, wherein the second authentication information is generated based on a result of the verification of the first authentication information,
verify (7040) the second authentication information, and
transmit (7045), to the second SSP (660, 760), the SPB in case that the second authentication information is verified.

6. The first SSP of claim 5, wherein the at least one processor is configured to:
identify whether to generate a bundle transfer code to be used for transmitting the SSP,and
generate the bundle transfer code, based on the identification.

7. The first SSP of claim 5, wherein the at least one processor is configured to transmit the bundle transfer code to the second SSP.

8. The first SSP of claim 5,
wherein the at least one processor is configured to generate the bundle transfer code in case that it is identified to generate the bundle transfer code, and
wherein the bundle transfer code is a preconfigured unique ID of the SPB or a new ID for identifying the SPB.

9. A method performed by a second smart secure platform, SSP, (660, 760), the method comprising:
receiving (6020), from a first SSP (610, 710), a bundle transfer code to be used for transmitting a secondary platform bundle, SPB;
transmitting (7010), to the first SSP (610, 710), information on the second SSP (660, 760);
receiving (7020), from the first SSP (610, 710), first authentication information for authenticating the first SSP (610, 710) after transmitting the information on the second SSP (660, 760);
verifying (7030) the first authentication information;
generating (7030) second authentication information for authenticating the second SSP (660, 760), based on a result of the verification;
transmitting (7035), to the first SSP (610, 710), the second authentication information and the bundle transfer code; and
receiving (7045), from the first SSP (610, 710), the SPB in case that the second authentication information is verified.

10. The method of claim 9, wherein the receiving of the SPB further comprises receiving a bundle transfer configuration related to the SPB.

11. A second smart secure platform, SSP, (660, 760)comprising:
a transceiver; and
at least one processor connected to the transceiver,
wherein the at least one processor is configured to:
receive (6020), from a first SSP (610, 710), a bundle transfer code to be used for transmitting a secondary platform bundle, SPB,
transmit (7010), to the first SSP (610, 710), information on the second SSP (660, 760),
receive (7020), from the first SSP (610, 710), first authentication information for authenticating the first SSP (610, 710) after transmitting the information on the second SSP (660, 760),
verify (7030) the first authentication information,
generate (7030) second authentication information for authenticating the second SSP (660, 760), based on a result of the verification,
transmit (7035), to the first SSP (610, 710), the second authentication information and the bundle transfer code, and
receive (7045), from the first SSP (610, 710), the SPB in case that the second authentication information is verified.

12. The second SSP of claim 11, wherein the at least one processor is configured to receive a bundle transfer configuration related to the SPB.

## Patentansprüche

1. Verfahren, das von einer ersten intelligenten sicheren Plattform, SSP, (610, 710) durchgeführt wird, wobei das Verfahren Folgendes umfasst:
Übertragen (6020), an eine zweite SSP (660, 760), eines Bündeltransfercodes, der zum Übertragen eines sekundären Plattformbündels, SPB, zu verwenden ist;
Empfangen (7010), von der zweiten SSP (660, 760), von Informationen über die zweite SSP (660, 760);
Übertragen (7020), an die zweite SSP (660, 760), von ersten Authentifizierungsinformationen zum Authentifizieren der ersten SSP (610, 710) nach dem Empfangen der Informationen über die zweite SSP (660, 760);
Empfangen (7035), von der zweiten SSP (660, 760), von zweiten Authentifizierungsinformationen zum Authentifizieren der zweiten SSP (660, 760) und des Bündeltransfercodes, wobei die zweiten Authentifizierungsinformationen basierend auf einem Ergebnis der Verifizierung der ersten Authentifizierungsinformationen erzeugt werden;
Verifizieren (7040) der zweiten Authentifizierungsinformationen, und
Übertragen (7045), an die zweite SSP (660, 760), des SPB, falls die zweiten Authentifizierungsinformationen verifiziert sind.

2. Verfahren nach Anspruch 1, ferner umfassend:
Identifizieren, ob ein Bündeltransfercode zu erzeugen ist, der zum Übertragen der SSP zu verwenden ist; und
Erzeugen des Bündeltransfercodes basierend auf der Identifizierung.

3. Verfahren nach Anspruch 1, ferner umfassend Übertragen des Bündeltransfercodes an die zweite SSP.

4. Verfahren nach Anspruch 1,
Identifizieren eines sekundären Plattformbündels, SPB, das an eine zweite SSP zu übertragen ist;
Bestimmen, ob die Übertragung des SPB gestattet ist, basierend auf Bündeltransferkonfigurationsinformationen, die sich auf das SPB beziehen; und
Übertragen des SPB an die zweite SSP basierend auf der Bestimmung.

5. Erste intelligente sichere Plattform, SSP (610, 710), umfassend:
einen Transceiver; und
mindestens einen Prozessor, der mit dem Transceiver verbunden ist,
wobei der mindestens eine Prozessor konfiguriert ist zum:
Übertragen (6020), an eine zweite SSP (660, 760), eines Bündeltransfercodes, der zum Übertragen eines sekundären Plattformbündels, SPB, zu verwenden ist,
Empfangen (7010), von der zweiten SSP (660, 760), von Informationen über die zweite SSP,
Übertragen (7020), an die zweite SSP (660, 760), von ersten Authentifizierungsinformationen zum Authentifizieren der ersten SSP (610, 710) nach dem Empfangen der Informationen über die zweite SSP (660, 760),
Empfangen (7035), von der zweiten SSP (660, 760), von zweiten Authentifizierungsinformationen zum Authentifizieren der zweiten SSP (660, 760) und des Bündeltransfercodes, wobei die zweiten Authentifizierungsinformationen basierend auf einem Ergebnis der Verifizierung der ersten Authentifizierungsinformationen erzeugt werden,
Verifizieren (7040) der zweiten Authentifizierungsinformationen, und
Übertragen (7045), an die zweite SSP (660, 760), des SPB, falls die zweiten Authentifizierungsinformationen verifiziert sind.

6. Erste SSP nach Anspruch 5, wobei der mindestens eine Prozessor konfiguriert ist zum:
Identifizieren, ob ein Bündeltransfercode zu erzeugen ist, der zum Übertragen der SSP zu verwenden ist, und
Erzeugen des Bündeltransfercodes basierend auf der Identifizierung.

7. Erste SSP nach Anspruch 5, wobei der mindestens eine Prozessor so konfiguriert ist, dass er den Bündeltransfercode an die zweite SSP überträgt.

8. Erste SSP nach Anspruch 5,
wobei der mindestens eine Prozessor so konfiguriert ist, dass er den Bündeltransfercode erzeugt, falls identifiziert wird, dass der Bündeltransfercode zu erzeugen ist, und
wobei der Bündeltransfercode eine vorkonfigurierte eindeutige ID des SPB oder eine neue ID zum Identifizieren des SPB ist.

9. Verfahren, das von einer zweiten intelligenten sicheren Plattform, SSP, (660, 760) durchgeführt wird, wobei das Verfahren Folgendes umfasst:
Empfangen (6020), von einer ersten SSP (610, 710), eines Bündeltransfercodes, der zum Übertragen eines sekundären Plattformbündels, SPB, zu verwenden ist;
Übertragen (7010), an die erste SSP (610, 710), von Informationen über die zweite SSP (660, 760);
Empfangen (7020), von der ersten SSP (610, 710), von ersten Authentifizierungsinformationen zum Authentifizieren der ersten SSP (610, 710) nach dem Übertragen der Informationen über die zweite SSP (660, 760);
Verifizieren (7030) der ersten Authentifizierungsinformationen;
Erzeugen (7030) zweiter Authentifizierungsinformationen zum Authentifizieren der zweiten SSP (660, 760) basierend auf einem Ergebnis der Verifizierung;
Übertragen (7035), an die erste SSP (610, 710), der zweiten Authentifizierungsinformationen und des Bündeltransfercodes; und
Empfangen (7045), von der ersten SSP (610, 710), des SPB, falls die zweiten Authentifizierungsinformationen verifiziert sind.

10. Verfahren nach Anspruch 9, wobei das Empfangen des SPB ferner Empfangen einer Bündeltransferkonfiguration umfasst, die sich auf das SPB bezieht.

11. Zweite intelligente sichere Plattform, SSP (660, 760), umfassend:
einen Transceiver; und
mindestens einen Prozessor, der mit dem Transceiver verbunden ist,
wobei der mindestens eine Prozessor konfiguriert ist zum:
Empfangen (6020), von einer ersten SSP (610, 710), eines Bündeltransfercodes, der zum Übertragen eines sekundären Plattformbündels, SPB, zu verwenden ist,
Übertragen (7010), an die erste SSP (610, 710), von Informationen über die zweite SSP (660, 760),
Empfangen (7020), von der ersten SSP (610, 710), von ersten Authentifizierungsinformationen zum Authentifizieren der ersten SSP (610, 710) nach dem Übertragen der Informationen über die zweite SSP (660, 760),
Verifizieren (7030) der ersten Authentifizierungsinformationen,
Erzeugen (7030) zweiter Authentifizierungsinformationen zum Authentifizieren der zweiten SSP (660, 760) basierend auf einem Ergebnis der Verifizierung,
Übertragen (7035), an die erste SSP (610, 710), der zweiten Authentifizierungsinformationen und des Bündeltransfercodes, und
Empfangen (7045), von der ersten SSP (610, 710), des SPB, falls die zweiten Authentifizierungsinformationen verifiziert sind.

12. Zweite SSP nach Anspruch 11, wobei der mindestens eine Prozessor so konfiguriert ist, dass er eine Bündeltransferkonfiguration empfängt, die sich auf das SPB bezieht.

## Revendications

1. Procédé exécuté par une première plateforme sécurisée intelligente, SSP (610, 710), le procédé comprenant :
transmettre (6020), à une deuxième SSP (660, 760), un code de transfert de faisceau à utiliser pour transmettre un faisceau de plateformes secondaires, SPB ;
recevoir (7010), en provenance de la deuxième SSP (660, 760), des informations sur la deuxième SSP (660, 760) ;
transmettre (7020), à la deuxième SSP (660, 760), des premières informations d'authentification pour authentifier la première SSP (610, 710) après avoir reçu les informations sur la deuxième SSP (660, 760) ;
recevoir (7035), depuis la deuxième SSP (660, 760), les deuxièmes informations d'authentification pour authentifier la deuxième SSP (660, 760) et le code de transfert de faisceau, dans lequel les deuxièmes informations d'authentification sont générées sur la base d'un résultat de la vérification des premières informations d'authentification ;
vérifier (7040) les deuxièmes informations d'authentification ; et
transmettre (7045), à la deuxième SSP (660, 760), le SPB dans le cas où les deuxièmes information d'authentification sont vérifiées.

2. Procédé de la revendication 1, comprenant en outre :
déterminer s'il faut générer un code de transfert de faisceau à utiliser pour transmettre la SSP ; et
générer le code de transfert de faisceau, en se basant sur l'identification.

3. Procédé de la revendication 1, comprenant en outre la transmission du code de transfert de faisceau à la deuxième SSP.

4. Procédé de la revendication 1,
identifier un faisceau de plateformes secondaires, SPB, à transmettre à une deuxième SSP ;
déterminer si la transmission du SPB est autorisée en se basant sur les informations de configuration de transfert de faisceau relatives au SPB ; et
transmettre le SPB à la deuxième SSP, en se basant sur la détermination.

5. Première plateforme sécurisée intelligente, SSP (610, 710), comprenant :
un émetteur-récepteur ; et
au moins un processeur connecté à l'émetteur-récepteur,
dans laquelle l'au moins un processeur est configuré pour :
transmettre (6020), à une deuxième SSP (660, 760), un code de transfert de faisceau à utiliser pour transmettre un faisceau de plateformes secondaires, SPB,
recevoir (7010), depuis la deuxième SSP (660, 760), des informations sur la deuxième SSP,
transmettre (7020), à la deuxième SSP (660, 760), les premières informations d'authentification pour authentifier la première SSP (610, 710) après avoir reçu les informations sur la deuxième SSP (660, 760),
recevoir (7035), depuis la deuxième SSP (660, 760), des deuxièmes informations d'authentification pour authentifier la deuxième SSP (660, 760) et le code de transfert de faisceau, dans laquelle les deuxièmes informations d'authentification sont générées sur la base d'un résultat de la vérification des premières informations d'authentification,
vérifier (7040) les deuxièmes informations d'authentification, et
transmettre (7045), à la deuxième SSP (660, 760), le SPB au cas où les deuxièmes informations d'authentification sont vérifiées.

6. Première SSP de la revendication 5, dans laquelle l'au moins un processeur est configuré pour :
déterminer s'il convient de générer un code de transfert de faisceau à utiliser pour transmettre la SSP, et
générer le code de transfert de faisceau en se basant sur l'identification.

7. Première SSP de la revendication 5, dans laquelle l'au moins un processeur est configuré pour transmettre le code de transfert de faisceau à la deuxième SSP.

8. Première SSP de la revendication 5,
dans laquelle l'au moins un processeur est configuré pour générer le code de transfert de faisceau dans le cas où il est identifié pour générer le code de transfert de faisceau, et
dans laquelle le code de transfert de faisceau est un identifiant unique préconfiguré du SPB ou un nouvel ID permettant d'identifier le SPB.

9. Procédé exécuté par une deuxième plateforme sécurisée intelligente, SSP, (660, 760), le procédé comprenant :
recevoir (6020), d'une première SSP (610, 710), un code de transfert de faisceau à utiliser pour la transmission d'un faisceau de plateformes secondaires, SPB;
transmettre (7010), à la première SSP (610, 710), des informations sur la deuxième SSP (660, 760) ;
recevoir (7020), de la part de la première SSP (610, 710), des premières informations d'authentification pour authentifier la première SSP (610, 710) après avoir transmis les informations sur la deuxième SSP (660, 760) ;
vérifier (7030) les premières informations d'authentification ;
générer (7030) des deuxièmes informations d'authentification pour authentifier la deuxième SSP (660, 760), en se basant sur un résultat de la vérification ;
transmettre (7035), à la première SSP (610, 710), les deuxièmes informations d'authentification et le code de transfert de faisceau ; et
recevoir (7045), depuis la première SSP (610, 710), le SPB dans le cas où les deuxièmes informations d'authentification sont vérifiées.

10. Procédé de la revendication 9, dans lequel la réception du SPB comprend en outre la réception d'une configuration de transfert de faisceau liée au SPB.

11. Deuxième plateforme sécurisée intelligente, SSP, (660, 760)comprenant :
un émetteur-récepteur ; et
au moins un processeur connecté à l'émetteur-récepteur,
dans lequel l'au moins un processeur est configuré pour :
recevoir (6020), depuis une première SSP (610, 710), un code de transfert de faisceau à utiliser pour la transmission d'un faisceau de plateformes secondaires, SPB;
transmettre (7010), à la première SSP (610, 710), des informations sur la deuxième SSP (660, 760) ;
recevoir (7020), de la part de la première SSP (610, 710), des premières informations d'authentification pour authentifier la première SSP (610, 710) après avoir transmis les informations sur la deuxième SSP (660, 760),
vérifier (7030) les premières informations d'authentification,
générer (7030) des deuxièmes informations d'authentification pour authentifier la deuxième SSP (660, 760), en se basant sur un résultat de la vérification,
transmettre (7035), à la première SSP (610, 710), les deuxièmes informations d'authentification et le code de transfert de faisceau, et
recevoir (7045), depuis la première SSP (610, 710), le SPB dans le cas où les deuxièmes informations d'authentification sont vérifiées.

12. Deuxième SSP de la revendication 11, dans laquelle l'au moins un processeur est configuré pour recevoir une configuration de transfert de faisceau liée au SPB.
